(19) Europäisches Patentamt
European Patent Office
Office européen des brevets

(11) **EP 4 507 436 A1**

(12) **EUROPEAN PATENT APPLICATION**
published in accordance with Art. 153(4) EPC

(43) Date of publication:
**12.02.2025 Bulletin 2025/07**

(21) Application number: **22936154.8**

(22) Date of filing: **07.04.2022**

(51) International Patent Classification (IPC):
*H04W 72/54* (2023.01)

(52) Cooperative Patent Classification (CPC):
Y02D 30/70

(86) International application number:
**PCT/CN2022/085667**

(87) International publication number:
**WO 2023/193211 (12.10.2023 Gazette 2023/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **MU, Qin**
  **Beijing 100085 (CN)**
• **ZHANG, Juan**
  **Beijing 100085 (CN)**
• **HU, Ziquan**
  **Beijing 100085 (CN)**

(74) Representative: **Dehns Germany Partnerschaft
mbB
Theresienstraße 6-8
80333 München (DE)**

(54) **RSRP THRESHOLD DETERMINATION METHOD AND APPARATUS, AND COMMUNICATION
DEVICE AND STORAGE MEDIUM**

(57)     The embodiments of the present disclosure provide an RSRP threshold determination method and apparatus, and a communication device and a storage medium. The RSRP threshold determination method comprises: sending configuration information, wherein the configuration information is used for indicating a related parameter of an RSRP threshold corresponding to a UE of at least one antenna structure, and UEs of different antenna structures within the same frequency range (FR) correspond to different RSRP threshold values (S21).

```
┌──────────────┐          ┌──────────────┐
│   Network    │          │      UE      │
│   Device     │          │              │
└──────┬───────┘          └──────┬───────┘
       │                         │
       │ S21: send configuration │
       │ information, where the  │
       │ configuration information is │
       │ configured to indicate one or more │
       │ RSRP threshold-related parameters │
       │ corresponding to UE of at least one │
       │ antenna structure; where RSRP │
       │ thresholds corresponding to UEs of │
       │ different antenna structures in a same │
       │ FR are different │
       │ ──────────────────────▶ │
       │                         │
```

FIG. 2

## Description

## TECHNICAL FIELD

The present disclosure relates to but is not limited to the field of communication technologies, and in particular to methods and apparatuses for determining a reference signal received power (RSRP) threshold, a communication device, and a storage medium.

## BACKGROUND

In a long term evolution (LTE) system of the fourth generation mobile communication technology (4G), in order to support Internet of things (IoT) services, two technologies, machine type communication (MTC) and narrow band Internet of things (NB-IoT), are proposed. These two technologies are mainly aimed at scenarios with a relatively low rate and high latency. For example, a NB-IoT device can only support a maximum rate of a few hundred kbps at present. For another example, a MTC device can only support a maximum rate of a few Mbps at present. At the same time, with the continuous development of IoT businesses, for example, the popularity of video surveillance, smart homes, wearable devices, and industrial sensor monitoring, etc., devices in the two technologies generally require speeds of tens or hundreds of Mbps and relatively high latency. Thus, devices in the MTC and NB-IoT in 4G LTE cannot satisfy needs of constantly evolving IoT businesses.

A new type of user equipment (UE) has been proposed to cover mid-end IoT devices. The new type of UE can be a reduced capability (RedCap) UE or a new radio lightweight (NR-lite) UE. This new type of UE generally needs to meet one of the following requirements: low cost, low complexity, a certain degree of coverage increase or decrease, and power saving. Compared with the middle-end UE and high-end UE in the NR, an antenna structure of the RedCap UE is reduced. However, the current protocol does not distinguish reference signal received power (RSRP) thresholds for UEs of different antenna structures, which will cause the UEs of different antenna structures to be unable to select an appropriate RSRP threshold.

## SUMMARY

The embodiments of the present disclosure disclose methods and apparatuses for determining a reference signal received power (RSRP) threshold, a communication device, and a storage medium.

According to a first aspect of the present disclosure, there is provided a method for determining a RSRP threshold, performed by a network device. The method includes:

sending configuration information, where the configuration information is configured to indicate one or more RSRP threshold-related parameters corresponding to user equipment (UE) of at least one antenna structure; where RSRP thresholds corresponding to UEs of different antenna structures in a same frequency range (FR) are different.

According to a second aspect of the present disclosure, there is provided a method for determining a RSRP threshold, performed by a UE. The method includes:

receiving configuration information, where the configuration information is configured to indicate one or more RSRP threshold-related parameters corresponding to UE of at least one antenna structure; where RSRP thresholds corresponding to UEs of different antenna structures in a same frequency range (FR) are different; and

determining the one or more RSRP threshold-related parameters of the UE based on the configuration information and an antenna structure of the UE.

According to a third aspect of the present disclosure, there is provided an apparatus for determining a RSRP threshold applied to a network device. The apparatus includes:

a sending module, configured to send configuration information, where the configuration information is configured to indicate one or more RSRP threshold-related parameters corresponding to user equipment (UE) of at least one antenna structure; where RSRP thresholds corresponding to UEs of different antenna structures in a same frequency range (FR) are different.

According to a fourth aspect of the present disclosure, there is provided an apparatus for determining a RSRP threshold applied to a UE. The apparatus includes:

a receiving module, configured to receive configuration information, where the configuration information is configured to indicate one or more RSRP threshold-related parameters corresponding to user equipment (UE) of at least one antenna structure; where RSRP thresholds corresponding to UEs of different antenna structures in a same frequency range (FR) are different; and

a processing module, configured to determine the one or more RSRP threshold-related parameters of the UE based on the configuration information and an antenna structure of the UE.

According to a fifth aspect of the present disclosure, there is provided a communication device, including:

one or more processors; and

a memory configured to store instructions executable by the one or more processors;

where the one or more processors are configured to implement the method of any embodiment of the present disclosure when executing the instructions.

According to a sixth aspect of the present disclosure, there is provided a computer storage medium, which stores a computer executable program. When the executable program is executed by a processor, the method of any embodiment of the present disclosure is implemented.

The technical solution provided by the embodiments of the present disclosure may include the following beneficial effects:

In the embodiments of the present disclosure, the configuration information can be sent to the UE through the network device, where the configuration information is configured to indicate one or more RSRP threshold-related parameters corresponding to the UE of at least one antenna structure; where RSRP thresholds corresponding to UEs of different antenna structures in a same FR are different. Thus, different RSRP threshold-related parameters can be configured for UEs of different antenna structures under the same FR, that is, appropriate RSRP threshold-related parameters can be configured for the transmission performance of different antenna structures.

In this way, on the one hand, the occurrence of poor communication quality for the UE with a relatively complex antenna structure after accessing a cell due to a too low configured RSRP threshold can be reduced. On the other hand, the occurrence of resource waste caused by configuring a relatively high RSRP threshold for the UE with a relatively simple antenna structure can be reduced.

It should be understood that the general description above and the detailed description below are only exemplary and explanatory, and cannot limit the embodiments of the present disclosure.

## BRIEF DESCRIPTION OF THE DRAWINGS

FIG. 1 is a schematic structural diagram of a wireless communication system according to an exemplary embodiment.

FIG. 2 is a flowchart of a method for determining an RSRP threshold according to an exemplary embodiment.

FIG. 3 is a flowchart of a method for determining an RSRP threshold according to an exemplary embodiment.

FIG. 4 is a flowchart of a method for determining an RSRP threshold according to an exemplary embodiment.

FIG. 5 is a flowchart of a method for determining an RSRP threshold according to an exemplary embodiment.

FIG. 6 is a flowchart of a method for determining an RSRP threshold according to an exemplary embodiment.

FIG. 7 is a flowchart of a method for determining an RSRP threshold according to an exemplary embodiment.

FIG. 8 is a block diagram of an apparatus for determining an RSRP threshold according to an exemplary embodiment.

FIG. 9 is a block diagram of an apparatus for determining an RSRP threshold according to an exemplary embodiment.

FIG. 10 is a block diagram of an apparatus for determining an RSRP threshold according to an exemplary embodiment.

FIG. 11 is a block diagram of a UE according to an exemplary embodiment.

FIG. 12 is a block diagram of a base station according to an exemplary embodiment.

## DETAILED DESCRIPTION OF THE EMBODIMENTS

The exemplary embodiments will be described in detail herein, and examples thereof are shown in accompanying drawings. When the following descriptions refer to the accompanying drawings, unless otherwise indicated, the same numbers in different drawings represent the same or similar elements. The implementations described in the following exemplary embodiments do not represent all the implementations consistent with the embodiments of the present disclosure. Rather, they are merely examples of the apparatus and method consistent with some aspects of the embodiments of the present disclosure as detailed in the appended claims.

Terms used in the embodiments of the present disclosure are for the purpose of describing specific embodiments only, and are not intended to limit the embodiments of the present disclosure. The singular forms "a", "an" and "this" used in the embodiments of the present disclosure and the appended claims are also intended to include plural forms, unless the context clearly indicates other meanings. It should also be understood that the term "and/or" as used herein refers to and includes any and all possible combinations of one or more of the associated listed items.

It should be understood that although terms first, second, third, etc. may be used in the embodiments of the present disclosure to describe various information, such information should not be limited to these terms. These terms are only used to distinguish the same type of information from each other. For example, first information may also be referred to as second information, and similarly, the second information may also be referred to as the first information without departing from the scope of the present disclosure. Depending on the context, the word "if" as used herein can be interpreted as "at the time of', "when" or "in response to determining".

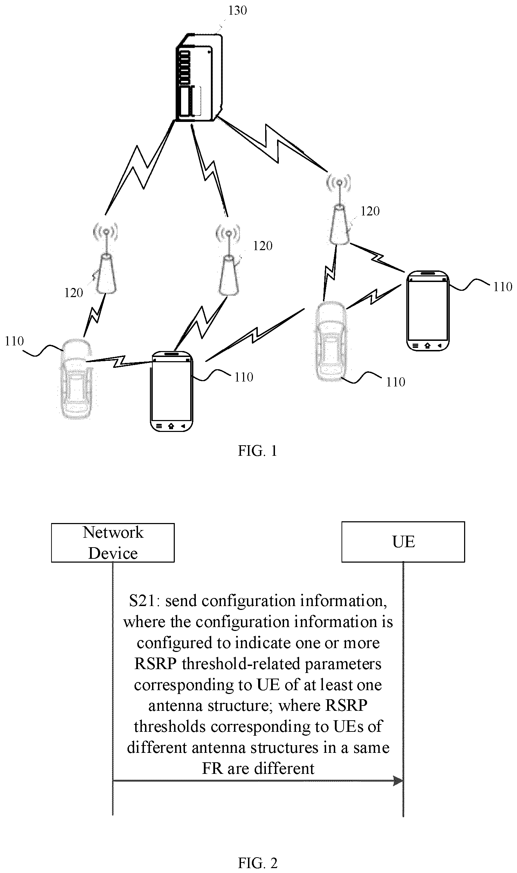

Referring to FIG. 1, FIG. 1 is a schematic structural diagram showing a wireless communication system provided in an embodiment of the present disclosure. As shown in FIG. 1, the wireless communication system is a communication system based on cellular mobile communication technology, and may include several user equipment (UEs) 110 and several base stations 120.

The UE 110 may be a device that provides voice and/or data connectivity to a user. The UE 110 may communicate with one or more core networks via a radio access network (RAN). The UE 110 may be an Internet of Things UE, such as a sensor device, a mobile phone (or a "cellular" phone) and a computer with an Internet of Things UE. For example, the UE 110 may be a fixed, portable, pocket-sized, handheld, built-in computer or vehicle-mounted apparatus, for example, a station (STA), a subscriber unit, a subscriber station, a mobile station, a mobile, a remote station, an access point, a remote terminal, an access terminal, a user terminal, a user agent, a user device, or user equipment (UE). Or, the UE 110 may be a device of an unmanned aerial vehicle. Or, the UE 110 may be a vehicle-mounted device, for example, a driving computer with a wireless communication function, or a wireless communication device externally connected with a driving computer. Or, the UE 110 may be a roadside device, such as a street lamp, a signal lamp or other roadside devices with a wireless communication function.

The base station 120 may be a network side device in the wireless communication system. The wireless communication system may be a 4th generation mobile communication (4G) system, also referred to as a long term evolution (LTE) system. Or, the wireless communication system may be a 5G system, also referred to as a new radio (NR) system or a 5G NR system. Or, the wireless communication system may be a next generation system of the 5G system. The access network in the 5G system may be referred to as a new generation-radio access network (NG-RAN).

The base station 120 may be an evolved base station (eNB) used in the 4G system. Or, the base station 120 may be a centralized distributed architecture base station (gNB) used in the 5G system. When the base station 120 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 120 is not limited in the embodiments of the present disclosure.

A wireless connection may be established between the base station 120 and the UE 110 through a wireless radio. In different embodiments, the wireless radio is a wireless radio based on the 4th generation mobile communication network technology (4G) standard. Or, the wireless radio is a wireless radio based on the 5th generation mobile communication network technology (5G) standard. For example, the wireless radio is a new radio. Or, the wireless radio may also be a wireless radio based on the next generation mobile communication network technology standard of the 5G.

In some embodiments, an end to end (E2E) connection may also be established between UEs 110, for example, a vehicle to vehicle (V2V) communication, a vehicle to infrastructure (V2I) communication and a vehicle to pedestrian (V2P) communication in a vehicle to everything (V2X) communication.

Herein, the above-mentioned UE can be considered as the terminal of the following embodiments.

In some embodiments, the above wireless communication system may further include a network management device 130.

Several base stations 120 are connected to the network management device 130, respectively. The network management device 130 may be a core network device in the wireless communication system. For example, the network management device 130 may be a mobility management entity (MME) in an evolved packet core (EPC). Or, the network management device can also be other core network device, for example, a serving gateway (SGW), a public data network gateway (PGW), a policy and charging rules function (PCRF) or a home subscriber server (HSS), etc. The implementation form of the network management device 130 is not limited in the embodiments of the present disclosure.

In order to facilitate those skilled in the art to understand, the embodiments of the present disclosure enumerate implementation manners to clearly illustrate the technical solutions of the embodiments of the present disclosure. Of course, those skilled in the art can understand that the embodiments provided in the present disclosure can be executed independently, or can be combined with the methods of other embodiments of the present disclosure to be executed together, or can be executed together with some methods in other related technologies after being executed alone or being combined, which is limited in the embodiments of the present disclosure.

In order to better understand the technical solution described in any embodiment of the present disclosure, firstly, a reference signal received power (RSRP) threshold in related technologies is partially explained.

In some embodiments, the NR system defines an RSRP based on a synchronization signal block (SSB) and a channel state information-reference signal (CSI-RS). For example, the following RSRP thresholds are defined in a random access procedure or beam recovery:

an RSRP threshold of a synchronization signal block (rsrp-ThresholdSSB);
an RSRP threshold of a CSI-RS (rsrp-ThresholdCSI-RS);
an RSRP threshold of a super uplink synchronization signal block (rsrp-ThresholdSSB-SUL);
an RSRP threshold of a synchronization signal block during random access (msgA-RSRP-ThresholdSSB);
a random access RSRP threshold (msgA-RSRP-Threshold);
an RSRP for beam failure recovery (rsrp-ThresholdBFR).

Here, the use of each RSRP threshold can be shown as follows:

rsrp-ThresholdSSB:
UE may select the SS block and corresponding PRACH resource for path-loss estimation and (re) transmission based on SS blocks that satisfy the threshold (see TS 38.213 [13]).
rsrp-ThresholdSSB:
L1-RSRP threshold used for determining whether a candidate beam may be used by the UE to attempt contention free random access to recover from beam failure (see TS 38.213 [13], clause 6).
rsrp-ThresholdSSB-SUL:
The UE selects SUL carrier to perform random access based on this threshold (see TS 38.321 [3], clause 5.1.1). The value applies to all the BWPs.
msgA-RSRP-Threshold:
The UE selects 2-step random access type to perform random access based on this threshold (see TS 38.321 [3], clause 5.1.1). This field is only present if both 2-step and 4-step RA type are configured for the BWP.
msgA-RSRP-ThresholdSSB:
UE may select the SS block and corresponding PRACH resource for path-loss estimation and (re) transmission based on SS blocks that satisfy the threshold (see TS 38.213 [13]).
rsrp-ThresholdCSI-RS:
an RSRP threshold for the selection of CSI-RS for 4-step RA type. If the Random Access procedure is initiated for beam failure recovery, rsrp-ThresholdCSI-RS is equal to rsrp-ThresholdSSB in BeamFailureRecoveryConfig IE.
That is:
rsrp-ThresholdSSB, UE may select the SSB and a corresponding physical random access channel (PRACH) resource for path-loss estimation and (re)transmission based on SSBs that satisfy the threshold (rsrp-ThresholdSSB);
rsrp-ThresholdSSB, a L1-RSRP threshold used for determining whether a candidate beam may be used by the UE to attempt contention free random access to recover from beam failure.
rsrp-ThresholdSSB-SUL, the UE selects SUL carrier to perform random access based on this threshold (rsrp-ThresholdSSB-SUL). The rsrp-ThresholdSSB-SUL applies to all the bandwidth parts (BWPs). All the BWPs include at least one of the following: BWPs dedicated to RedCap UEs, BWPs dedicated to normal UEs, and BWPs shared by RedCap UEs and normal UEs.

msgA-RSRP-Threshold, 2-step random access type is selected based on the threshold (msgA-RSRP-Threshold) to perform random access. The field indicating the msgA-RSRP-Threshold is only present if both 2-step and 4-step random access (RA) type are configured for the BWP.
msgA-RSRP-ThresholdSSB, the UE may select the SSB and a corresponding PRACH resource for path-loss estimation and (re)transmission based on SSBs that satisfy the threshold (msgA-RSRP-ThresholdSSB).
rsrp-ThresholdCSI-RS, an RSRP threshold for the selection of CSI-RS for the 4-step RA type. If the random access procedure is initiated for beam failure recovery, the threshold (rsrp-ThresholdCSI-RS) is equal to the rsrp-ThresholdSSB in a BeamFailureRecoveryConfig information element (IE).

In some embodiments, a RedCap UE supports at least one of the following antenna structures:

a RedCap UE in FR1 supports an antenna structure with 2 receiving antennas or 1 receiving antenna;
a RedCap UE in FR2 supports an antenna structure with 2 receiving antennas; and each receiving antenna has N antenna elements or each receiving antenna includes $\frac{N}{2}$ antenna elements; where N can be an integer greater than 1.

As shown in FIG. 2, an embodiment of the present disclosure provides a method for determining an RSRP threshold, which is performed by a network device and includes step S21.
In step S21, configuration information is sent, where the configuration information is configured to indicate one or more RSRP threshold-related parameters corresponding to UE of at least one antenna structure; where RSRP thresholds corresponding to UEs of different antenna structures in a same frequency range (FR) are different.
In an implementation, RSRP threshold-related parameters corresponding to different antenna structures in a same FR are different.
In another implementation, in each embodiment of the present disclosure, RSRP threshold-related parameters corresponding to different antenna structures in different FRs are the same or different. Of course, it is possible that different antenna structures in different FRs adopt the same RSRP threshold-related parameters. For example, RSRP threshold-related parameters corresponding to a first antenna structure in a FR1 may be the same or different from those corresponding to the first antenna structure in a FR2.
In an implementation, the network device can configure corresponding RSRP threshold-related parameters for the UE based on an antenna structure supported by the UE. In another implementation, the network device can determine RSRP threshold-related parameters of the UE based on the antenna structure supported by the UE and a frequency range (FR) in which the UE is located.

Here, the network device can be, but is not limited to, an access network device or a core network device. The access network device can be various types of base stations. For example, the access network device can be a 2G base station, a 3G base station, a 4G base station, a 5G base station, or other evolved base station. The core network device can be, but is not limited to, various entities or network element functions of the core network.

In step 21, the network device can send the configuration information to the UE. Here, the UE can be various mobile terminals or fixed terminals. For example, the UE may be, but is not limited to, a mobile phone, a computer, a server, a wearable device, a game control platform, or a multimedia device. For example, the UE can be a RedCap UE or a 5G NR-lite UE, etc.

Here, if the core network device sends the configuration information, it can be that the core network device sends the configuration information to the base station and sends the configuration information to the UE.

In step 21, the network device can send a system message to the UE, and the system message carries the configuration information. The system message can be SIB-X. For example, the system message could be SIB1, SIB2, SIB3, SIB4, SIB5, or SIB11, etc.

In step S21, the configuration information can be sent through any type of message, for example, a radio resource control (RRC) message or a paging message. The message for sending the configuration information is not limited herein.

In step S21, the network device can send the configuration information to one or more UEs. In some embodiments of the present disclosure, a plurality of refers to two or more. When the network device sends the configuration information to a plurality of UEs, the network device can send the configuration information to a plurality of UEs in a cell.

Here, the configuration information can include at least one antenna structure and RSRP threshold-related parameters corresponding to the antenna structure. In this way, the UE can determine the RSRP threshold-related parameters corresponding to the antenna structure of the UE through the antenna structure of the UE and the configuration information.

In some embodiments, the configuration information is configured to indicate one or more RSRP threshold-related parameters corresponding to UEs of at least one antenna structure in at least one FR. Here, the FR includes but is not limited to at least one of the following: a first FR or a second FR. The first FR can be FR1. The second FR can be FR2.

In an example, the configuration information is configured to indicate one or more RSRP threshold-related parameters corresponding to UEs of at least one antenna structure in the first FR and/or configured to indicate one or more RSRP threshold-related parameters corresponding to UEs of at least one antenna structure in the second FR.

Here, the configuration information can include at least one antenna structure in at least one FR and RSRP threshold-related parameters corresponding to the antenna structure in the FR.

In some embodiments, the antenna structure of the UE includes but is not limited to at least one of the following:

an antenna structure of the UE in the first FR; where the antenna structure of the UE in the first FR includes an antenna structure with 1 or 2 receiving antennas or an antenna structure with M receiving antennas; where M is an integer greater than 1; or an antenna structure of the UE in the second FR; where the antenna structure of the UE in the second FR includes an antenna structure with 2 receiving antennas and antenna elements of each receiving antenna being a first predetermined number or a second predetermined number; where the first predetermined number is different from the second predetermined number; where the first FR and the second FR include different frequency ranges.

In an embodiment, the first FR includes FR1; and/or, the second FR includes FR2. For example, the frequency range corresponding to the FR1 can be from 450MHz to 6000MHz; the frequency range corresponding to the FR2 can be from 24250MHz to 52600MHz.

In other embodiments, the first FR and the second FR can be any frequency range, as long as an upper limit of the first FR is smaller than a lower limit of the second FR, or as long as a central value of the first FR is smaller than a central value of the second FR.

For example, the antenna structure of the UE in the FR1 can be an antenna structure including 1 receiving antenna or 2 receiving antennas; the antenna structure of the UE in the FR1 can be an antenna structure that includes 2 receiving antennas and each receiving antenna includes N antenna elements, or an antenna structure that includes 2 receiving antennas and each receiving antenna includes $\dfrac{N}{2}$ antenna elements; where, N is an even number greater than 1.

In some embodiments, the RSRP threshold-related parameters include but are not limited to at least one of the following:

an RSRP threshold; or
an offset threshold.

In some embodiments, the RSRP threshold includes at least one of the following:

an RSRP threshold of a synchronization signal block (rsrp-ThresholdSSB), configured for a UE to determine whether to allow to select a physical random access channel (PRACH) resource corresponding to a SSB with an RSRP greater than the rsrp-ThresholdSSB to perform operations;

an RSRP threshold of a channel state information-reference signal (CSI-RS) (rsrp-ThresholdCSI-RS), configured for the UE to determine whether to allow to select a CSI-RS with an RSRP greater than the rsrp-ThresholdCSI-RS to perform operations;

an RSRP threshold of a SSB during random access (msgA-RSRP-ThresholdSSB), configured for the UE to determine whether to allow to select a PRACH resource of MsgA corresponding to a SSB with an RSRP greater than the msgA-RSRP-ThresholdSSB to perform operations;

a random access RSRP threshold (msgA-RSRP-Threshold), configured for the UE to determine whether to select a 2-step random access type to perform random access and/or whether to allow to select a random access channel (RACH) resource with an RSRP greater than the msgA-RSRP-Threshold to perform random access; or

an RSRP threshold for beam failure recovery (rsrp-ThresholdBFR), configured for the UE to determine whether to allow to select a RACH resource with an RSRP greater than the rsrp-ThresholdBFR to perform random access during beam failure recovery.

In some embodiments, the configuration information is configured to indicate at least one of the following:

an RSRP threshold corresponding to the UE with at least 2 receiving antennas in the first FR is a first RSRP threshold;

an RSRP threshold corresponding to the UE with 1 receiving antenna in the first FR is a second RSRP threshold and/or an offset threshold corresponding to the UE with 1 receiving antenna in the first FR is a first offset threshold; where the second RSRP threshold is smaller than the first RSRP threshold;

an RSRP threshold corresponding to the UE with an antenna structure of a first predetermined number of antenna elements for each receiving antenna in the second FR is a third RSRP threshold; or

an RSRP threshold corresponding to the UE with an antenna structure of a second predetermined number of antenna elements for each receiving antenna in the second FR is a fourth RSRP threshold and/or an offset threshold corresponding to the UE with the antenna structure of the second predetermined number of antenna elements for each receiving antenna in the second FR is a second offset threshold; where the first predetermined number is greater than the second predetermined number, and the third RSRP threshold is greater than the fourth RSRP threshold.

The first offset threshold refers to an offset compared to the first RSRP threshold. For example, if the first RSRP threshold is 100 and the first offset threshold is 10, it can be determined that the RSRP threshold (which is the second RSRP threshold) corresponding to the UE with 1 receiving antenna in the first FR is 100-10=90. For another example, if the first RSRP threshold is -100 and the first offset threshold is -10, it can be determined that the RSRP threshold (which is the second RSRP threshold) corresponding to the UE with 1 receiving antenna in the first FR is -100+ (-10) = (-110).

Similarly, the second offset threshold refers to an offset compared to the third RSRP threshold. For example, if the third RSRP threshold is 100 and the second offset threshold is 10, it can be determined that the RSRP threshold (which is the fourth RSRP threshold) corresponding to the UE with the antenna structure of the second predetermined number of antenna elements for each receiving antenna in the second FR is 100-10=90. For another example, if the third RSRP threshold is -100 and the second offset threshold is -10, it can be determined that the RSRP threshold (which is the fourth RSRP threshold) corresponding to the UE with the antenna structure of the second predetermined number of antenna elements for each receiving antenna in the second FR is -100+ (-10) = (-110).

In an example, the configuration information is used to indicate at least one of the following:

an RSRP threshold corresponding to an antenna structure of 2 receiving antennas supported by the UE in the FR1 is the first RSRP threshold;

an RSRP threshold corresponding to an antenna structure of 1 receiving antenna supported by the UE in the FR1 is the second RSRP threshold and/or an offset threshold corresponding to the antenna structure of 1 receiving antenna supported by the UE in the FR1 is the first offset threshold;

an RSRP threshold corresponding to an antenna structure in which each receiving antenna of the UE includes N antenna elements in the FR2 is the third RSRP threshold; or

an RSRP threshold corresponding to an antenna structure in which each receiving antenna of the UE includes $\dfrac{N}{2}$ antenna elements in the FR2 is the fourth RSRP threshold and/or an offset threshold corresponding to the antenna structure in which each receiving antenna of the UE includes $\dfrac{N}{2}$ antenna elements in the FR2 is the second offset threshold; where N is an even number greater than 1.

In an embodiment, the first RSRP threshold is the same as the third RSRP threshold; and/or, the second RSRP threshold is the same as the fourth RSRP threshold; and/or, the first offset threshold is the same as the second offset threshold.

In another embodiment, the first RSRP threshold is different from the third RSRP threshold; and/or, the second RSRP threshold is different from the fourth RSRP threshold; and/or, the first offset threshold is different from the second offset threshold.

In the embodiment of the present disclosure, the configuration information can be sent to one or more UEs through a network device, where the configuration information includes the RSRP threshold-related parameters of the UE of at least one antenna structure; where the configuration information is used for UEs of different antenna structures to determine corresponding RSRP threshold-related parameters. In this way, different RSRP threshold-related parameters can be configured for UEs of different antenna structures under the same FR, that is, appropriate RSRP threshold-related parameters can be configured for the transmission performance of different antenna structures. In this way, on the one hand, the occurrence of poor communication quality for the UE with a relatively complex antenna structure after accessing a cell due to a too low configured RSRP threshold can be reduced. On the other hand, the occurrence of resource waste caused by configuring a relatively high RSRP threshold for the UE with a relatively simple antenna structure can be reduced.

It should be noted that those skilled in the art can understand that the method provided in the embodiment of the present disclosure can be executed separately or together with some methods in the embodiments of the present disclosure or related technologies.

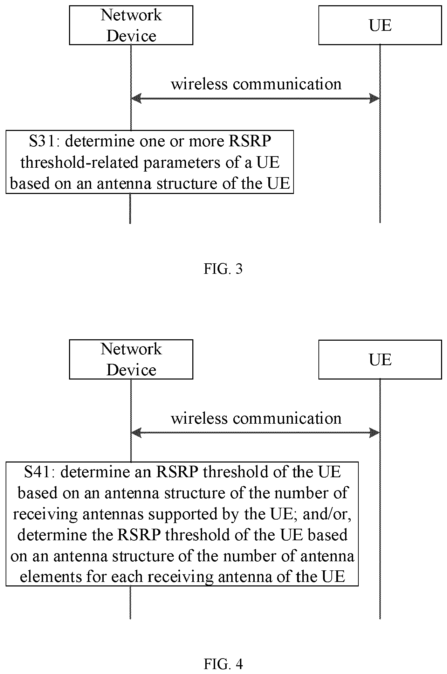

As shown in FIG. 3, an embodiment of the present disclosure provides a method for determining an RSRP threshold, which is performed by a network device and includes step S31.

In step S31, one or more RSRP threshold-related parameters of a UE are determined based on an antenna structure of the UE.

In some embodiments of the present disclosure, the antenna structure can be the antenna structure of step S21 described above; the RSRP threshold-related parameters can be the RSRP threshold-related parameters of step S21 described above; the first FR can be the first FR in the above embodiments; the second FR can be the second FR in the above embodiments.

Different antenna structures correspond to different RSRP threshold-related parameters.

In another implementation, RSRP threshold-related parameters corresponding to different antenna structures under different FRs are the same or different. Of course, it is possible that different antenna structures under different FRs adopt the same RSRP threshold-related parameters. For example, RSRP threshold-related parameters corresponding to a first antenna structure under a FR1 may be the same or different from those corresponding to the first antenna structure under a FR2.

In some embodiments, step S31 includes:

an RSRP threshold of the UE is determined based on an antenna structure of the number of receiving antennas supported by the UE; and/or, the RSRP threshold of the UE is determined based on an antenna structure of the number of antenna elements for each receiving antenna of the UE.

As shown in FIG. 4, an embodiment of the present disclosure provides a method for determining an RSRP threshold, which is performed by a network device and includes step S41.

In step S41, an RSRP threshold of the UE is determined based on an antenna structure of the number of receiving antennas supported by the UE; and/or, the RSRP threshold of the UE is determined based on an antenna structure of the number of antenna elements for each receiving antenna of the UE.

An embodiment of the present disclosure provides a method for determining an RSRP threshold. The method is performed by a network device and may include: an RSRP threshold of the UE is determined based on an antenna structure of the number of receiving antennas supported by the UE and a frequency range in which the UE operates.

An embodiment of the present disclosure provides a method for determining an RSRP threshold. The method is performed by a network device and may include: an RSRP threshold of the UE is determined based on an antenna structure of the number of antenna elements for each receiving antenna of the UE and a frequency range in which the UE operates.

In some embodiments, the RSRP threshold of the UE is determined based on the antenna structure of the number of receiving antennas supported by the UE in step S41, including:

in response to an antenna structure of at least 2 receiving antennas supported by the UE in a first FR, the RSRP threshold of the UE is determined as a first RSRP threshold; or in response to an antenna structure of 1 receiving antenna supported by the UE in the first FR, the RSRP threshold of the UE is determined as a second RSRP threshold; where the first RSRP threshold is greater than the second RSRP threshold.

An embodiment of the present disclosure provides a method for determining an RSRP threshold. The method is performed by a network device and may include: in response to an antenna structure of at least 2 receiving antennas supported by the UE in a first FR, an RSRP threshold of the UE is determined as a first RSRP threshold.

For example, if the network device determines that the UE under a FR1 supports an antenna structure with at least 2 receiving antennas, the RSRP threshold of the UE is determined as the first RSRP threshold. Here, the first RSRP threshold may be an RSRP threshold used by UEs specified in traditional 3GPP Release 15 and/or Release 16. Or, the first RSRP threshold can be an RSRP threshold used by normal UEs.

An embodiment of the present disclosure provides a method for determining an RSRP threshold. The method is performed by a network device and may include: in response to an antenna structure of 1 receiving antenna supported by the UE in a first FR, an RSRP threshold of the UE is determined as a second RSRP threshold.

For example, if the network device determines that the UE under a FR2 supports an antenna structure with 1 receiving antenna, the RSRP threshold of the UE is determined as the second RSRP threshold. Here, the second RSRP threshold can be a separate RSRP threshold defined by the network device, or the second RSRP threshold can be an RSRP threshold specified in a wireless communication protocol, as long as the second RSRP threshold is lower than the first RSRP threshold. Or, the second RSRP threshold is lower than the RSRP threshold used by UEs specified in the 3GPP Release 15 and/or Release 16.

In the embodiment of the present disclosure, different RSRP thresholds can be set for antenna structures with different receiving antennas supported by the UE under the FR1. The RSRP threshold is positively correlated with the number of receiving antennas supported by the UE. Thus, a UE with a relatively complex antenna structure can be set with a relatively high RSRP threshold (the first RSRP threshold), so that an RSRR measurement value required for the UE to be allowed to access and other operations is also relatively high; or, a UE with a relatively simple antenna structure is set with a relatively low RSRP threshold value, so that an RSRP measurement value required for the UE to be allowed to access and other operations is also relatively low (second RSRP threshold). In this way, UEs with different antenna structures can be set with appropriate RSRP threshold values, so that UEs with different antenna structures can access cells based on appropriate RSRP measurement values. If an appropriate RSRP measurement is used to access the cell, the stability of the UE after accessing the cell can be improved.

In some embodiments, the RSRP threshold of the UE is determined based on the antenna structure of the number of antenna elements for each receiving antenna of the UE, including:

in response to an antenna structure of a first predetermined number of antenna elements for each receiving antenna of the UE in a second FR, the RSRP threshold of the UE is determined as a third RSRP threshold; or

in response to an antenna structure of a second predetermined number of antenna elements for each receiving antenna of the UE in the second FR, the RSRP threshold of the UE is determined as a fourth RSRP threshold;

where the first predetermined number is greater than the second predetermined number; the third RSRP threshold is greater than the fourth RSRP threshold.

In an embodiment, the first predetermined number may be twice the second predetermined number.

An embodiment of the present disclosure provides a method for determining an RSRP threshold. The method is performed by a network device and may include: in response to an antenna structure of a first predetermined number of antenna elements for each receiving antenna of the UE in a second FR, an RSRP threshold of the UE is determined as a third RSRP threshold.

In an embodiment, the first predetermined number is N; where N is an integer greater than 0.

For example, if the network device determines an antenna structure with N antenna elements for each receiving antenna of the UE under a FR2, the RSRP threshold of the UE is determined as the third RSRM threshold. Here, the third RSRP threshold may be an RSRP threshold used by traditional R15 and/or R16 UEs.

In an embodiment, the third RSRP threshold is equal to the first RSRP threshold. In another embodiment, the third RSRP threshold is not equal to the first RSRP threshold.

An embodiment of the present disclosure provides a method for determining an RSRP threshold. The method is performed by a network device and may include: in response to an antenna structure of a second predetermined number of antenna elements for each receiving antenna of the UE in a second FR, an RSRP threshold of the UE is determined as a fourth RSRP threshold.

In an embodiment, the second predetermined number is $\dfrac{N}{2}$; where N is an even number greater than 0.

For example, if the network device determines an antenna structure with $\dfrac{N}{2}$ antenna elements for each receiving antenna of the UE under a FR2, the RSRP threshold of the UE is determined as the fourth RSRM threshold. Here, the fourth RSRP threshold can be a separate RSRP threshold defined by the network device, or the fourth RSRP threshold can be an RSRP threshold specified in a wireless communication protocol, as long as the fourth RSRP threshold is lower than the third RSRP threshold.

In an embodiment, the fourth RSRP threshold is equal to the second RSRP threshold. In another embodiment, the fourth RSRP threshold is not equal to the second RSRP threshold.

In the embodiment of the present disclosure, different RSRP thresholds can be set for antenna structures with different numbers of antenna elements included in each receiving antenna of the UE under the FR2. The RSRP threshold is positively correlated with the number of antenna elements supported by each receiving antenna of the UE. Thus, a UE with a relatively complex antenna structure can be set with a relatively high RSRP threshold, so that an RSRR measurement value required for the UE to be allowed to access and other operations is also relatively high; or, a UE with a relatively simple antenna structure is set with a relatively low RSRP threshold value, so that an RSRP measurement value required for the UE to be allowed to access and other operations is also relatively low. In this way, UEs with different antenna structures can be set with appropriate RSRP threshold values, so that UEs with different antenna structures can access cells based on appropriate RSRP measurement values.

In some embodiments, step S31 includes:

> an offset threshold of the UE is determined based on an antenna structure of the number of receiving antennas supported by the UE;
> and/or,
> the offset threshold of the UE is determined based on an antenna structure of the number of antenna elements for each receiving antenna of the UE.

Here, the offset threshold refers to an offset compared to the RSRP threshold. For example, if an RSRP threshold is 100 and the offset threshold is 10, it can be determined that the RSRP threshold corresponding to the UE is 100-10=90.

An embodiment of the present disclosure provides a method for determining an RSRP threshold. The method is performed by a network device and may include: an offset threshold of the UE is determined based on an antenna structure of the number of receiving antennas supported by the UE and a frequency range in which the UE operates.

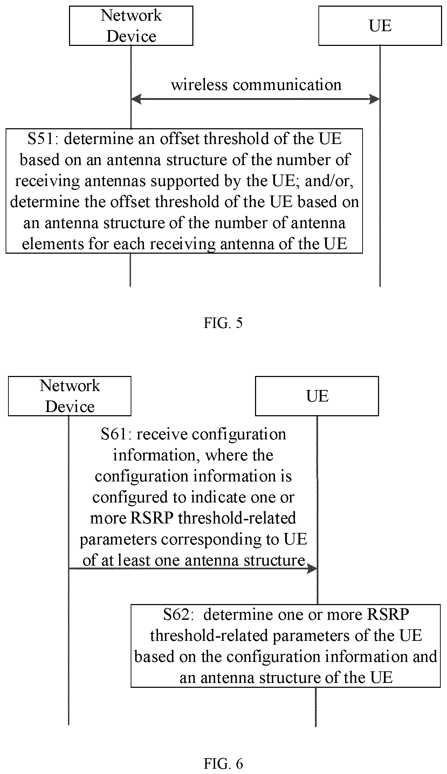

As shown in FIG. 5, an embodiment of the present disclosure provides a method for determining an RSRP threshold, which is performed by a network device and includes step S51.

In step S51, an offset threshold of the UE is determined based on an antenna structure of the number of receiving antennas supported by the UE; and/or, the offset threshold of the UE is determined based on an antenna structure of the number of antenna elements for each receiving antenna of the UE.

In some embodiments, the offset threshold of the UE is determined based on the antenna structure of the number of receiving antennas supported by the UE in step S51, including:
based on an antenna structure of 1 receiving antenna supported by the UE in a first FR, the offset threshold of the UE is determined as a first offset threshold.

An embodiment of the present disclosure provides a method for determining an RSRP threshold. The method is performed by a network device and may include: based on an antenna structure of 1 receiving antenna supported by the UE in a first FR, an offset threshold of the UE is determined as a first offset threshold.

For example, if the network device determines that the UE supports an antenna structure with 1 receiving antenna under a FR1, the RSRP threshold is determined as the second RSRP threshold and/or the UE offset threshold is determined as the first offset threshold. Here, the first offset threshold can be any value.

In an embodiment, a sum of the first RSRP threshold and the first offset threshold is the second RSRP threshold.

Here, if the UE supports an antenna structure with 2 receiving antennas under the FR1, the offset threshold of the UE is zero.

An embodiment of the present disclosure provides a method for determining an RSRP threshold. The method is performed by a network device and may include: an offset threshold of the UE is determined based on an antenna structure of the number of antenna elements for each receiving antenna of the UE and a frequency range in which the UE operates.

In some embodiments, the offset threshold of the UE is determined based on the antenna structure of the number of antenna elements for each receiving antenna of the UE in step S51, including:
based on an antenna structure of a second predetermined number of antenna elements for each receiving antenna of the UE in a second FR, the offset threshold of the UE is determined as a second offset threshold.

An embodiment of the present disclosure provides a method for determining an RSRP threshold. The method is performed by a network device and may include: based on an antenna structure of a second predetermined number of antenna elements for each receiving antenna of the UE in a second FR, an offset threshold of the UE is determined as a second offset threshold.

For example, if the network device determines an antenna structure with $\dfrac{N}{2}$ antenna elements for each receiving antenna of the UE under a FR2, the RSRP threshold of the UE is determined as the fourth RSRM threshold and/or the offset threshold of the UE is determined as the second offset threshold. Here, the second offset threshold can be any value. The second offset threshold may or may not be equal to the first offset threshold.

In an embodiment, a sum of the third RSRP threshold and the second offset threshold is the fourth RSRP threshold.

Here, if the UE has an antenna structure with N antenna elements for each receiving antenna under the FR2, the offset threshold of the UE is zero.

In the embodiment of the present disclosure, an offset threshold can be determined for a UE with a relatively simple antenna structure relative to a UE with a relatively complex antenna structure, so that the RSRP threshold can be corrected for the UE with the relatively simple antenna structure based on the offset threshold, thereby obtaining the RSRP threshold suitable for the UE antenna structure.

An embodiment of the present disclosure provides a method for determining an RSRP threshold. The method is performed by a network device and may include: an offset threshold is obtained based on a wireless communication protocol; or, the offset threshold is set in advance.

It should be noted that those skilled in the art can understand that the method provided in the embodiment of the present disclosure can be executed separately or together with some methods in the embodiments of the present disclosure or related technologies.

In some embodiments, the configuration information is further configured to indicate one or more RSRP threshold-related parameters corresponding to UE with a predetermined power level; where the one or more RSRP threshold-related parameters corresponding to the UE with the predetermined power level include a fourth RSRP threshold and/or a second offset threshold.

In some embodiments, the configuration information includes one or more RSRP threshold-related parameters of UE of at least one power level. The RSRP threshold-related parameters include an RSRP threshold and/or an offset threshold.

Here, the configuration information may include UE of at least one power level and RSRP threshold-related parameters corresponding to the power level.

Therefore, in the embodiment of the present disclosure, the RSRP threshold-related parameters of the UE can also be determined based on UEs of different power levels.

In some embodiments, the configuration information includes one or more RSRP threshold-related parameters corresponding to UE with a predetermined power level; where the one or more RSRP threshold-related parameters corresponding to the UE with the predetermined power level include a fourth RSRP threshold and/or a second offset threshold.

In an embodiment, the predetermined power level may be a PC7 power level. Here, the PC7 power level can be determined for an antenna structure with

$$\frac{N}{2}$$

antenna elements for each receiving antenna of the UE under a FR2.

In an embodiment, the configuration information includes: the RSRP threshold corresponding to the UE of the PC7 power level is the second RSRP threshold and/or the second offset threshold.

In the embodiment of the present disclosure, the UE can also determine whether the UE itself is at a predetermined power level. If so, RSRP threshold-related parameters corresponding to the predetermined power level of the UE can be determined based on configuration information. In this way, the UE can effectively determine the appropriate RSRP threshold and/or offset threshold for the UE in various methods.

It should be noted that those skilled in the art can understand that the method provided in the embodiment of the present disclosure can be executed separately or together with some methods in the embodiments of the present disclosure or related technologies.

The following method for determining an RSRP threshold is performed by a UE and is similar to the description of the method for determining an RSRP threshold performed by the network device mentioned above. For the technical details not disclosed in embodiments of the method for determining an RSRP threshold performed by the UE, please refer to the description of the examples of the method for determining an RSRP threshold performed by the network device, which will not be described in detail here.

As shown in FIG. 6, an embodiment of the present disclosure provides a method for determining an RSRP threshold, which is performed by a UE and includes steps S61 and S62.

In step S61, configuration information is received, where the configuration information is configured to indicate one or more RSRP threshold-related parameters corresponding to UE of at least one antenna structure;

where RSRP thresholds corresponding to UEs of different antenna structures in a same frequency range (FR) are different.

In step S62, one or more RSRP threshold-related parameters of the UE are determined based on the configuration information and an antenna structure of the UE.

In some embodiments of the present disclosure, the configuration information can be the configuration information in step 21 described above; the antenna structure can be the antenna structure in step S21 described above; the RSRP threshold-related parameters can be the RSRP threshold-related parameters in step S21 described above.

For example, the RSRP threshold-related parameters include at least one of the following:

an RSRP threshold; or
an offset threshold.

For another example, the RSRP threshold includes at least one of the following:

an RSRP threshold of a synchronization signal block (rsrp-ThresholdSSB), configured for a UE to determine whether to allow to select a physical random access channel (PRACH) resource corresponding to a SSB with an RSRP greater than the rsrp-ThresholdSSB to perform operations;

an RSRP threshold of a channel state information-reference signal (CSI-RS) (rsrp-ThresholdCSI-RS), configured for the UE to determine whether to allow to select a CSI-RS with an RSRP greater than the rsrp-ThresholdCSI-RS to perform operations;

an RSRP threshold of a SSB during random access (msgA-RSRP-ThresholdSSB), configured for the UE to determine whether to allow to select a PRACH resource of MsgA corresponding to a SSB with an RSRP greater than the msgA-RSRP-ThresholdSSB to perform operations;

a random access RSRP threshold (msgA-RSRP-Threshold), configured for the UE to determine whether to select a 2-step random access type to perform random access and/or whether to allow to select a random access channel (RACH) resource with an RSRP greater than the msgA-RSRP-Threshold to perform random access; or

an RSRP threshold for beam failure recovery (rsrp-ThresholdBFR), configured for the UE to determine whether to allow to select a RACH resource with an RSRP greater than the rsrp-ThresholdBFR to perform random access during beam failure recovery.

For another example, the configuration information can be configured to indicate one or more RSRP threshold-related parameters corresponding to UEs of at least one antenna structure under at least one FR.

The configuration information can be configured to indicate one or more RSRP threshold-related parameters corresponding to UEs of at least one antenna structure under a first FR and/or configured to indicate one or more RSRP threshold-related parameters corresponding to UEs of at least one antenna structure under a second FR.

The configuration information can be configured to indicate at least one of the following:

an RSRP threshold corresponding to the UE with at least 2 receiving antennas under a first FR is a first RSRP threshold;

an RSRP threshold corresponding to the UE with 1 receiving antenna under the first FR is a second RSRP threshold and/or an offset threshold corresponding to the UE with 1 receiving antenna under the first FR is a first offset threshold; where the second RSRP threshold is smaller than the first RSRP threshold;

an RSRP threshold corresponding to the UE with an antenna structure of a first predetermined number of antenna elements for each receiving antenna under a second FR is a third RSRP threshold; or

an RSRP threshold corresponding to the UE with an antenna structure of a second predetermined number of antenna elements for each receiving antenna under the second FR is a fourth RSRP threshold and/or an offset threshold corresponding to the UE with the antenna structure of the second predetermined number of antenna elements for each receiving antenna under the second FR is a second offset threshold;

where the first predetermined number is greater than the second predetermined number, and the third RSRP threshold is greater than the fourth RSRP threshold.

In an example, the configuration information is configured to indicate at least one of the following:

an RSRP threshold corresponding to an antenna structure of 2 receiving antennas supported by the UE under a FR1 is a first RSRP threshold;

an RSRP threshold corresponding to an antenna structure of 1 receiving antenna supported by the UE under the FR1 is a second RSRP threshold and/or an offset threshold corresponding to the antenna structure of 1 receiving antenna supported by the UE under the FR1 is a first offset threshold;

an RSRP threshold corresponding to an antenna structure in which each receiving antenna of the UE includes N antenna elements under a FR2 is a third RSRP threshold; or

an RSRP threshold corresponding to an antenna structure in which each receiving antenna of the UE includes $\dfrac{N}{2}$ antenna elements under the FR2 is a fourth RSRP threshold and/or an offset threshold corresponding to the antenna structure in which each receiving antenna of the UE includes $\dfrac{N}{2}$ antenna elements under the FR2 is a second offset threshold; where N is an even number greater than.

An embodiment of the present disclosure provides a method for determining an RSRP threshold, which is performed by a UE and includes: it is determined whether the UE is allowed to access a cell and/or performs beam recovery-related operations based on the one or more RSRP threshold-related parameters of the UE.

An embodiment of the present disclosure provides a method for determining an RSRP threshold, which is performed by a UE and can include:

based on an RSRP measurement value of the UE being greater than or equal to the RSRP threshold, it is determined that the UE is allowed to access a cell and/or performs beam recovery-related operations; or,

based on the RSRP measurement value of the UE being less than the RSRP threshold, it is determined that the UE is not allowed to access the cell and/or performs the beam recovery-related operations.

Here, performing the beam recovery-related operations can be, but is not limited to, selecting a SSB and/or a CSI-RS with an RSRP greater than the RSRP threshold for random access.

In the embodiment of the present disclosure, the UE can accurately determine whether the current UE is suitable for accessing a cell and/or performing beam recovery-related operations by judging sizes of the RSRP measurement value and the RSRP threshold. In this way, the probability of UE accessing the cell and/or the success rate of beam recovery can be improved, or the waste of resources caused by accessing the cell or performing beam recovery operations at an inappropriate time can be reduced.

In some embodiments, step S62 includes:

an RSRP threshold corresponding to the UE is determined based on the configuration information and the antenna structure of the UE;
or,
an offset threshold increased for the UE is determined based on the configuration information and the antenna structure of the UE.

An embodiment of the present disclosure provides a method for determining an RSRP threshold, which is performed by a UE and can include:

an RSRP threshold corresponding to the UE is determined based on configuration information and an antenna structure of the UE; or,
an offset threshold increased for the UE is determined based on the configuration information and the antenna structure of the UE.

In some embodiments of the present disclosure, the first FR and the second FR are respectively the first FR and the second FR in the above embodiments.

An embodiment of the present disclosure provides a method for determining an RSRP threshold, which is performed by a UE and can include: an RSRP threshold corresponding to the UE is determined based on configuration information, an antenna structure of the UE, and a frequency range in which the UE operates.

An embodiment of the present disclosure provides a method for determining an RSRP threshold, which is performed by a UE and can include: an offset threshold increased for the UE is determined based on configuration information, an antenna structure of the UE, and a frequency range in which the UE operates.

In some embodiments, the RSRP threshold corresponding to the UE is determined based on the configuration information and the antenna structure of the UE, including:

in response to an antenna structure of at least 2 receiving antennas supported by the UE under a first FR, it is determined that the RSRR threshold corresponding to the UE is a first RSRP threshold based on the configuration information; or,
in response to an antenna structure of 1 receiving antenna supported by the UE under the first FR, it is determined that the RSRR threshold corresponding to the UE is a second RSRP threshold based on the configuration information; where the first RSRP threshold is greater than the second threshold.

An embodiment of the present disclosure provides a method for determining an RSRP threshold, which is performed by a UE and can include: in response to an antenna structure of at least 2 receiving antennas supported by the UE under a first FR, it is determined that an RSRR threshold corresponding to the UE is a first RSRP threshold based on configuration information.

For example, the UE under a FR1 is determined as a UE that supports an antenna structure with 2 receiving antennas. The UE obtains configuration information, which is at least used to indicate that an RSRP threshold corresponding to an antenna structure with 2 receiving antennas supported by a UE under the FR1 is the first RSRP threshold. The UE determines that the RSRP threshold corresponding to the UE is the first RSRP threshold.

An embodiment of the present disclosure provides a method for determining an RSRP threshold, which is performed by a UE and can include: in response to an antenna structure of 1 receiving antenna supported by the UE under a first FR, it is determined that an RSRR threshold corresponding to the UE is a second RSRP threshold based on configuration information.

For example, the UE under a FR1 is determined as a UE that supports an antenna structure with 1 receiving antenna. The UE obtains configuration information, which is at least used to indicate that an RSRP threshold corresponding to an antenna structure with 1 receiving antenna supported by a UE under the FR1 is the second RSRP threshold. The UE determines that the RSRP threshold corresponding to the UE is the second RSRP threshold.

In some embodiments, the RSRP threshold corresponding to the UE is determined based on the configuration information and the antenna structure of the UE, including:

in response to an antenna structure of a first predetermined number of antenna elements for each receiving antenna of the UE under a second FR, it is determined that the RSRP threshold corresponding to the UE is a third RSRP threshold based on the configuration information; or,

in response to an antenna structure of a second predetermined number of antenna elements for each receiving antenna of the UE under the second FR, it is determined that the RSRP threshold corresponding to the UE is a fourth RSRP threshold based on the configuration information; where the first predetermined number is greater than the second predetermined number; the third RSRP threshold is greater than the fourth RSRP threshold.

An embodiment of the present disclosure provides a method for determining an RSRP threshold, which is performed by a UE and can include: in response to an antenna structure of a first predetermined number of antenna elements for each receiving antenna of the UE under a second FR, it is determined that an RSRP threshold corresponding to the UE is a third RSRP threshold based on the configuration information.

For example, the UE under a FR2 is determined as a UE has an antenna structure with N antenna elements for each receiving antenna. The UE obtains configuration information, which is at least used to indicate that an RSRP threshold corresponding to an antenna structure with N antenna elements for each receiving antenna of a UE under the FR2 is the third RSRP threshold. The UE determines that the RSRP threshold corresponding to the UE is the third RSRP threshold.

An embodiment of the present disclosure provides a method for determining an RSRP threshold, which is performed by a UE and can include: in response to an antenna structure of a second predetermined number of antenna elements for each receiving antenna of the UE under a second FR, it is determined that an RSRP threshold corresponding to the UE is a fourth RSRP threshold based on the configuration information.

For example, the UE under a FR2 is determined as a UE has an antenna structure with $\dfrac{N}{2}$ antenna elements for each receiving antenna. The UE obtains configuration information, which is at least used to indicate that an RSRP threshold corresponding to an antenna structure with $\dfrac{N}{2}$ antenna elements for each receiving antenna of a UE under the FR2 is the fourth RSRP threshold. The UE determines that the RSRP threshold corresponding to the UE is the fourth RSRP threshold.

In some embodiments, the offset threshold increased for the UE is determined based on the configuration information and the antenna structure of the UE, including:
in response to an antenna structure of 1 receiving antenna supported by the UE under a first FR, it is determined that the offset threshold increased for the UE is a first offset threshold.

An embodiment of the present disclosure provides a method for determining an RSRP threshold, which is performed by a UE and can include: in response to an antenna structure of 1 receiving antenna supported by the UE under a first FR, it is determined that an offset threshold increased for the UE is a first offset threshold.

For example, the UE under a FR1 is determined as a UE that supports an antenna structure with 1 receiving antenna. The UE obtains configuration information, which is at least used to indicate that an RSRP threshold corresponding to an antenna structure with 1 receiving antenna supported by a UE under the FR1 is a second RSRP threshold and/or an offset threshold corresponding to the antenna structure with 1 receiving antenna supported by a UE under the FR1 is the first offset threshold. The UE determines that the RSRP threshold corresponding to the UE is the second RSRP threshold and/or the increased offset threshold is the first offset threshold.

Here, if the UE under the FR1 is determined as the UE that supports the antenna structure with 1 receiving antenna, and the offset threshold obtained by the UE is the first offset threshold, the UE can also determine the second RSRP threshold of the UE based on the sum of the first RSRP threshold and the first offset threshold. The first RSRP threshold is an RSRP threshold corresponding to the antenna structure with 2 receiving antennas supported by the UE under the FR1.

In some embodiments, the offset threshold increased for the UE is determined based on the configuration information and the antenna structure of the UE, including: in response to an antenna structure of a second predetermined number of antenna elements for each receiving antenna of the UE under a second FR, it is determined that the offset threshold of the UE is a second offset threshold.

An embodiment of the present disclosure provides a method for determining an RSRP threshold, which is performed by a UE and can include: in response to an antenna structure of a second predetermined number of antenna elements for each receiving antenna of the UE under a second FR, it is determined that an offset threshold of the UE is a second offset threshold.

For example, the UE under a FR2 is determined as a UE has an antenna structure with $\dfrac{N}{2}$ antenna elements for each receiving antenna. The UE obtains configuration information, which is at least used to indicate that an RSRP threshold corresponding to an antenna structure with $\dfrac{N}{2}$ antenna elements for each receiving antenna of a UE under the FR2 is the fourth RSRP threshold and/or an offset threshold corresponding to the antenna structure with $\dfrac{N}{2}$ antenna elements for each receiving antenna of the UE under the FR2 is the second offset threshold. The UE determines that the RSRP threshold corresponding to the UE is the fourth RSRP threshold and/or the increased offset threshold is the second offset threshold.

Here, if the UE under a FR2 is determined as the UE has the antenna structure with $\dfrac{N}{2}$ antenna elements for each receiving antenna, and the offset threshold obtained by the UE is the second offset threshold, the UE can also determine the fourth RSRP threshold of the UE based on the sum of the third RSRP threshold and the second offset threshold. The third RSRP threshold is an RSRP threshold corresponding to the antenna structure with $\dfrac{N}{2}$ antenna elements for each receiving antenna of the UE under the FR2.

In this way, by obtaining increased offset thresholds corresponding to different antenna structures, for example, obtaining the increased offset threshold corresponding to the antenna structure with 1 receiving antenna supported by the UE under the FR1 or the increased offset threshold corresponding to the antenna structure with $\dfrac{N}{2}$ antenna elements for each receiving antenna of the UE under the FR2, RSRP thresholds corresponding to these antenna structures can be accurately corrected, thereby obtaining relatively accurate RSRP thresholds. This is beneficial for UEs with these antenna structures to make relatively accurate decisions on whether to access a cell and/or perform beam recovery-related operations.

In some embodiments, the configuration information is configured to indicate one or more RSRP threshold-related parameters corresponding to UE of at least one power level. The RSRP threshold-related parameters include an RSRP threshold and/or an offset threshold.

In some embodiments, the configuration information includes one or more RSRP threshold-related parameters corresponding to UE with a predetermined power level; where the one or more RSRP threshold-related parameters corresponding to the UE with the predetermined power level include a fourth RSRP threshold and/or a second offset threshold.

In an embodiment, the predetermined power level may be a PC7 power level. Here, the PC7 power level can be determined for an antenna structure with $\dfrac{N}{2}$ antenna elements for each receiving antenna of the UE under a FR2.

In an embodiment, the configuration information is configured to indicate the RSRP threshold corresponding to the UE of the PC7 power level is the fourth RSRP threshold and/or the second offset threshold.

In some embodiments, step S62 includes:

in response to an antenna structure of a second predetermined number of antenna elements for each receiving antenna of the UE under a second FR, it is determined that the UE is at the predetermined power level; and

based on the predetermined power level and the configuration information, it is determined that the RSRP threshold corresponding to the UE is the fourth RSRP threshold and/or an offset threshold increased for the UE is the second offset threshold.

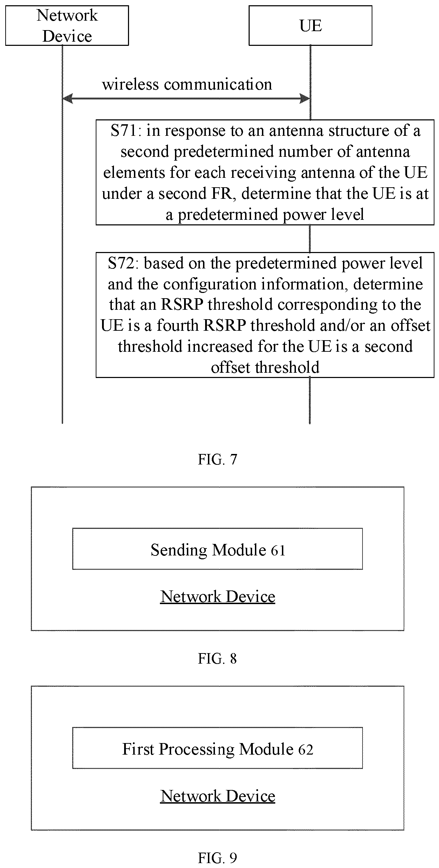

As shown in FIG. 7, an embodiment of the present disclosure provides a method for determining an RSRP threshold, which is performed by a UE and includes steps S71 and S72.

In step S71, in response to an antenna structure of a second predetermined number of antenna elements for each receiving antenna of the UE under a second FR, it is determined that the UE is at a predetermined power level.

In step S72, based on the predetermined power level and the configuration information, it is determined that an RSRP threshold corresponding to the UE is a fourth RSRP threshold and/or an offset threshold increased for the UE is a second offset threshold.

For example, if the UE under a FR2 has an antenna structure with $\dfrac{N}{2}$ antenna elements for each receiving antenna, it is determined that the UE is at the PC7 power level. The UE obtains configuration information, which is used to indicate that the RSRP threshold corresponding to the PC7 power level is the fourth RSRP threshold and/or the offset threshold corresponding to the PC7 power level is the second offset threshold. Based on the power level of the PC7 power level and the configuration information, the UE determines that the RSRP threshold of the UE is the fourth RSRP threshold and that the offset threshold increased for the UE is the second offset threshold.

In the embodiment of the present disclosure, the power level of the UE can be obtained through the antenna structure of the UE, and the RSRP threshold-related parameters of the UE can be determined based on the power level of the UE. In this way, when the UE cannot obtain configuration information including one or more antenna structures and corresponding RSRP threshold-related parameters, the UE can also obtain RSRP threshold-related parameters based on the predetermined power level of the UE, providing a plurality of ways to obtain the RSRP threshold-related parameters of the UE.

An embodiment of the present disclosure provides a method for determining an RSRP threshold, which is performed by a UE and includes: in response to a current power level of the UE being a predetermined power level, it is determined that an RSRP threshold corresponding to the UE is a fourth RSRP threshold and/or an offset threshold increased for the UE is a second offset threshold.

For example, the UE determines that the power level of the UE is a PC7 power level. The UE obtains configuration information, which is used to indicate that an RSRP threshold corresponding to the PC7 power level is the fourth RSRP threshold and/or an offset threshold corresponding to the PC7 power level is the second offset threshold. Based on the power level of the PC7 power level and the configuration information, the UE determines that the RSRP threshold of the UE is the fourth RSRP threshold and that the offset threshold increased for the UE is the second offset threshold.

In the embodiment of the present disclosure, the RSRP threshold and the offset threshold of the UE can also be directly determined based on the power level of the UE and the obtained configuration information including one or more power levels and corresponding RSRP threshold-related parameters, which can be applied to more scenarios where the RSRP threshold-related parameters corresponding to the UE are determined.

For details of the above embodiments, please refer to the description on the network device side, which will not be repeated here.

It should be noted that those skilled in the art can understand that the method provided in the embodiment of the present disclosure can be executed separately or together with some methods in the embodiments of the present disclosure or related technologies.

In order to further explain any embodiment of the present disclosure, a specific embodiment is provided below.

The embodiment of the present disclosure provides a method for determining an RSRP threshold, which is performed by communication devices. The communication devices include a network device and a UE. The method includes:

In step S81, the network device sends configuration information, where the configuration information is configured to indicate one or more RSRP thresholds corresponding to UE of at least one antenna structure.

Here, the RSRP thresholds include but are not limited to at least one of the following:

> rsrp-ThresholdSSB;
> rsrp-ThresholdCSI-RS;
> msgA-RSRP-ThresholdSSB;
> msgA-RSRP-Threshold; or
> rsrp TheshholdBFR.

In an example, the configuration information is configured to indicate at least one of the following:

> an RSRP threshold corresponding to an antenna structure of 2 receiving antennas supported by the UE under a FR1 is a first RSRP threshold;
> an RSRP threshold corresponding to an antenna structure of 1 receiving antenna supported by the UE under the FR1 is a second RSRP threshold;
an RSRP threshold corresponding to an antenna structure in which each receiving antenna of the UE includes N antenna elements under a FR2 is a third RSRP threshold; or
an RSRP threshold corresponding to an antenna structure in which each receiving antenna of the

$$\frac{N}{2}$$

UE includes $\frac{N}{2}$ antenna elements under the FR2 is a fourth RSRP threshold; where N is an even number greater than 1.

Here, both the first RSRP threshold and the second RSRP threshold can be equal to RSRP thresholds used by R15 or R16 UEs. The second RSRP threshold and the second RSRP threshold can both be defined RSRP thresholds. It only needs that the defined RSRP thresholds are smaller than the RSRP thresholds used by R15 or R16 UEs.

In step S82, the network device sends configuration information, where the configuration information is configured to indicate an offset threshold corresponding to UE of at least one antenna structure.

In an example, the configuration information is configured to indicate at least one of the following:

> an offset threshold corresponding to an antenna structure of 1 receiving antenna supported by the UE under a FR1 is a first offset threshold; or
> an offset threshold corresponding to an antenna structure in which each receiving antenna of the

$$\frac{N}{2}$$

UE includes $\frac{N}{2}$ antenna elements under a FR2 is a second offset threshold; where N is an even number greater than 1.

Here, both the first offset threshold and the second offset threshold can be preset by the network device or determined based on a wireless communication protocol.

After obtaining an offset threshold, for example, for a UE supporting an antenna structure with 1 receiving antenna under the FR1, the second RSRP threshold of the UE supporting an antenna structure with 1 receiving antenna under the FR1 can be determined based on the first RSRP threshold corresponding to the UE supporting an antenna structure with 2 receiving antennas under the FR2 and the first offset threshold. For example, for a UE that supports an antenna structure with each receiving

$$\frac{N}{2}$$

antenna including $\frac{N}{2}$ antenna elements under the FR2, the fourth RSRP threshold of the UE that supports the antenna structure with each receiving antenna in-

cluding $\dfrac{N}{2}$ antenna elements under the FR2 can be determined based on the third RSRP threshold of the UE that supports the antenna structure with each receiving antenna including N antenna elements under the FR2 and the second offset threshold.

In step S83, the network device sends configuration information, where the configuration information is configured to indicate one or more RSRP threshold-related parameters corresponding to UE with a predetermined power level.

As an example, the configuration information is configured to indicate that an RSRP threshold corresponding to a PC7 power level is a fourth RSRP threshold and/or an offset threshold corresponding to the PC7 power level is the second offset threshold. In this way, for a UE that supports an antenna structure with each receiving antenna including $\dfrac{N}{2}$ antenna elements under a FR2, it is determined that a power level of the UE to be PC7 power level. If the UE receives configuration information, it can be determined that the RSRP threshold of the UE is the fourth RSRP threshold and/or the offset threshold is the second offset threshold based on the configuration information.

It should be noted that those skilled in the art can understand that the method provided in the embodiment of the present disclosure can be executed separately or together with some methods in the embodiments of the present disclosure or related technologies.

As shown in FIG. 8, an apparatus for determining an RSRP threshold applied to a network device includes:

a sending module 61, configured to send configuration information, where the configuration information is configured to indicate one or more RSRP threshold-related parameters corresponding to user equipment (UE) of at least one antenna structure; where RSRP thresholds corresponding to UEs of different antenna structures in a same frequency range (FR) are different.

As shown in FIG. 9, an embodiment of the present disclosure provides an apparatus for determining an RSRP threshold, which is applied to a network device and includes:

a first processing module 62, configured to determine one or more RSRP threshold-related parameters of the UE based on the configuration information and an antenna structure of a UE.

In some embodiments, the one or more RSRP threshold-related parameters include at least one of:

an RSRP threshold; or
an offset threshold.

In some embodiments, the configuration information is configured to indicate one or more RSRP threshold-related parameters corresponding to UEs of at least one antenna structure in at least one FR.

In some embodiments, the configuration information is configured to indicate one or more RSRP threshold-related parameters corresponding to UEs of at least one antenna structure in the first FR and/or configured to indicate one or more RSRP threshold-related parameters corresponding to UEs of at least one antenna structure in the second FR.

In some embodiments, the configuration information is used to indicate at least one of the following:

an RSRP threshold corresponding to an antenna structure of 2 receiving antennas supported by the UE in the FR1 is a first RSRP threshold;
an RSRP threshold corresponding to an antenna structure of 1 receiving antenna supported by the UE in the FR1 is a second RSRP threshold and/or an offset threshold corresponding to the antenna structure of 1 receiving antenna supported by the UE in the FR1 is a first offset threshold;
an RSRP threshold corresponding to an antenna structure in which each receiving antenna of the UE includes N antenna elements in the FR2 is a third RSRP threshold; or
an RSRP threshold corresponding to an antenna structure in which each receiving antenna of the UE includes $\dfrac{N}{2}$ antenna elements in the FR2 is a fourth RSRP threshold and/or an offset threshold corresponding to the antenna structure in which each receiving antenna of the UE includes $\dfrac{N}{2}$ antenna elements in the FR2 is a second offset threshold; where N is an even number greater than 1.

In some embodiments, the RSRP threshold includes at least one of the following:

an RSRP threshold of a synchronization signal block (rsrp-ThresholdSSB), configured for a UE to determine whether to allow to select a physical random access channel (PRACH) resource corresponding to a SSB with an RSRP greater than the rsrp-ThresholdSSB to perform operations;
an RSRP threshold of a channel state information-reference signal (CSI-RS) (rsrp-ThresholdCSI-RS), configured for the UE to determine whether to allow to select a CSI-RS with an RSRP greater than the rsrp-ThresholdCSI-RS to perform operations;
an RSRP threshold of a SSB during random access (msgA-RSRP-ThresholdSSB), configured for the UE to determine whether to allow to select a PRACH resource of MsgA corresponding to a SSB with an RSRP greater than the msgA-RSRP-ThresholdSSB to perform operations;

a random access RSRP threshold (msgA-RSRP-Threshold), configured for the UE to determine whether to select a 2-step random access type to perform random access and/or whether to allow to select a random access channel (RACH) resource with an RSRP greater than the msgA-RSRP-Threshold to perform random access; or

an RSRP threshold for beam failure recovery (rsrp-ThresholdBFR), configured for the UE to determine whether to allow to select a RACH resource with an RSRP greater than the rsrp-ThresholdBFR to perform random access during beam failure recovery.

In some embodiments, the network device may be, but is not limited to, an access network device or a core network device.

An embodiment of the present disclosure provides an apparatus for determining an RSRP threshold, which is applied to a network device and may include a first processing module 62.

The first processing module 62 is configured to determine an RSRP threshold of a UE based on an antenna structure of a number of receiving antennas supported by the UE;

and/or,

the first processing module 62 is configured to determine the RSRP threshold of the UE based on an antenna structure of a number of antenna elements for each receiving antenna of the UE.

An embodiment of the present disclosure provides an apparatus for determining an RSRP threshold, which is applied to a network device and may include a first processing module 62.

The first processing module 62 is configured to determine an RSRP threshold of a UE based on an antenna structure of a number of receiving antennas supported by the UE and a FR in which the UE operates; and/or,

the first processing module 62 is configured to determine the RSRP threshold of the UE based on an antenna structure of a number of antenna elements for each receiving antenna of the UE and the FR in which the UE operates.

An embodiment of the present disclosure provides an apparatus for determining an RSRP threshold, which is applied to a network device and may include: a first processing module 62, configured to determine the RSRP threshold of the UE as a first RSRP threshold in response to an antenna structure of at least 2 receiving antennas supported by the UE in a first FR.

An embodiment of the present disclosure provides an apparatus for determining an RSRP threshold, which is applied to a network device and may include: a first processing module 62, configured to determine the RSRP threshold of the UE as a second RSRP threshold in response to an antenna structure of 1 receiving antenna supported by the UE in a first FR; where the first RSRP threshold is greater than the second RSRP threshold.

An embodiment of the present disclosure provides an apparatus for determining an RSRP threshold, which is applied to a network device and may include: a first processing module 62, configured to determine the RSRP threshold of the UE as a third RSRP threshold in response to an antenna structure of a first predetermined number of antenna elements for each receiving antenna of the UE in a second FR.

An embodiment of the present disclosure provides an apparatus for determining an RSRP threshold, which is applied to a network device and may include: a first processing module 62, configured to determine the RSRP threshold of the UE as a fourth RSRP threshold in response to an antenna structure of a second predetermined number of antenna elements for each receiving antenna of the UE in a second FR; where the first predetermined number is greater than the second predetermined number; the third RSRP threshold is greater than the fourth RSRP threshold.

An embodiment of the present disclosure provides an apparatus for determining an RSRP threshold, which is applied to a network device and may include: a first processing module 62, configured to determine an offset threshold of a UE in response to an antenna structure of a number of receiving antennas supported by the UE.

An embodiment of the present disclosure provides an apparatus for determining an RSRP threshold, which is applied to a network device and may include: a first processing module 62, configured to determine an offset threshold of a UE in response to an antenna structure of a number of antenna elements for each receiving antenna of the UE.

An embodiment of the present disclosure provides an apparatus for determining an RSRP threshold, which is applied to a network device and may include: a first processing module 62, configured to determine an offset threshold of a UE as a first offset threshold in response to an antenna structure with 1 receiving antenna supported by the UE in a first FR.

An embodiment of the present disclosure provides an apparatus for determining an RSRP threshold, which is applied to a network device and may include: a first processing module 62, configured to determine an offset threshold of a UE as a second offset threshold in response to an antenna structure of a second predetermined number of antenna elements for each receiving antenna of the UE in a second FR.

In some embodiments, the first FR includes FR1; and/or, the second FR includes FR2.

An embodiment of the present disclosure provides an apparatus for determining an RSRP threshold, which is applied to a network device and may include: a first processing module 62 configured to obtain an offset threshold based on a wireless communication protocol.

An embodiment of the present disclosure provides an apparatus for determining an RSRP threshold, which is applied to a network device and may include: a first processing module 62 configured to preset an offset threshold.

In some embodiments, the configuration information is configured to indicate one or more RSRP threshold-related parameters corresponding to UE with a predetermined power level; where the one or more RSRP threshold-related parameters corresponding to the UE with the predetermined power level include a fourth RSRP threshold and/or a second offset threshold.

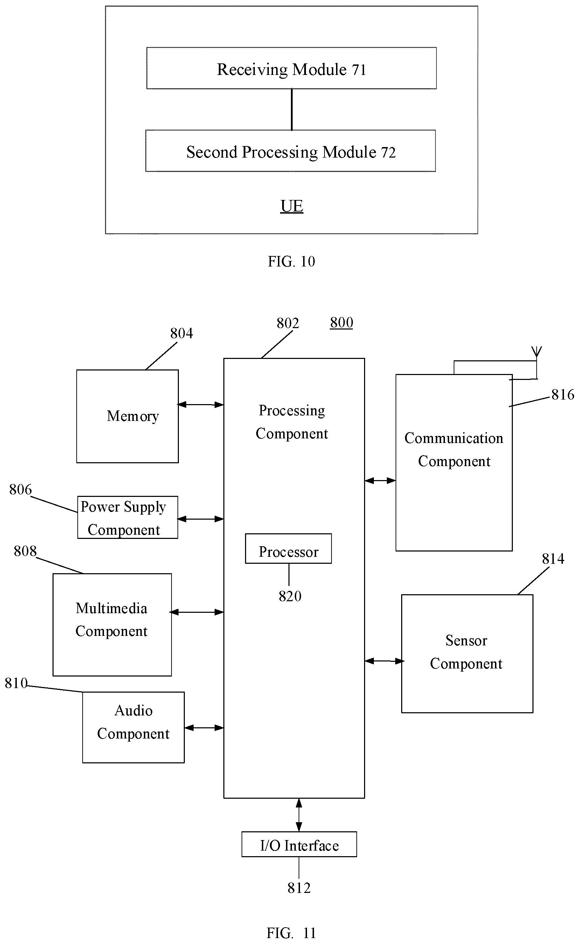

As shown in FIG. 10, an embodiment of the present disclosure provides an apparatus for determining an RSRP threshold, which is applied to a UE and includes:

a receiving module 71, configured to receive configuration information, where the configuration information is configured to indicate one or more RSRP threshold-related parameters corresponding to UE of at least one antenna structure; where RSRP thresholds corresponding to UEs of different antenna structures in a same frequency range (FR) are different; and a second processing module 72, configured to determine the one or more RSRP threshold-related parameters of the UE based on the configuration information and an antenna structure of the UE.

In some embodiments, the configuration information is configured to indicate the one or more parameters RSRP threshold-related parameters corresponding to the UE of the at least one antenna structure in at least one FR.

In some embodiments, the configuration information is configured to indicate one or more RSRP threshold-related parameters corresponding to UEs of at least one antenna structure in the first FR and/or configured to indicate one or more RSRP threshold-related parameters corresponding to UEs of at least one antenna structure in the second FR.

In some embodiments, the configuration information is used to indicate at least one of the following:

an RSRP threshold corresponding to an antenna structure of 2 receiving antennas supported by the UE in the FR1 is a first RSRP threshold;

an RSRP threshold corresponding to an antenna structure of 1 receiving antenna supported by the UE in the FR1 is a second RSRP threshold and/or an offset threshold corresponding to the antenna structure of 1 receiving antenna supported by the UE in the FR1 is a first offset threshold;

an RSRP threshold corresponding to an antenna structure in which each receiving antenna of the UE includes N antenna elements in the FR2 is a third RSRP threshold; or

an RSRP threshold corresponding to an antenna structure in which each receiving antenna of the UE includes $\dfrac{N}{2}$ antenna elements in the FR2 is a fourth RSRP threshold and/or an offset threshold corresponding to the antenna structure in which each receiving antenna of the UE includes $\dfrac{N}{2}$ antenna elements in the FR2 is a second offset threshold; where N is an even number greater than 1.

An embodiment of the present disclosure provides an apparatus for determining an RSRP threshold, which is applied to a UE and includes:

a second processing module 72, configured to determine whether the UE is allowed to access a cell and/or performs beam recovery-related operations based on one or more RSRP threshold-related parameters of the UE.

In some embodiments, the one or more RSRP threshold-related parameters include at least one of:

an RSRP threshold; or
an offset threshold.

In some embodiments, the RSRP threshold includes at least one of the following:

an RSRP threshold of a synchronization signal block (rsrp-ThresholdSSB), configured for a UE to determine whether to allow to select a physical random access channel (PRACH) resource corresponding to a SSB with an RSRP greater than the rsrp-ThresholdSSB to perform operations;

an RSRP threshold of a channel state information-reference signal (CSI-RS) (rsrp-ThresholdCSI-RS), configured for the UE to determine whether to allow to select a CSI-RS with an RSRP greater than the rsrp-ThresholdCSI-RS to perform operations;

an RSRP threshold of a SSB during random access (msgA-RSRP-ThresholdSSB), configured for the UE to determine whether to allow to select a PRACH resource of MsgA corresponding to a SSB with an RSRP greater than the msgA-RSRP-ThresholdSSB to perform operations;

a random access RSRP threshold (msgA-RSRP-Threshold), configured for the UE to determine whether to select a 2-step random access type to perform random access and/or whether to allow to select a random access channel (RACH) resource with an RSRP greater than the msgA-RSRP-Threshold to perform random access; or

an RSRP threshold for beam failure recovery (rsrp-ThresholdBFR), configured for the UE to determine whether to allow to select a RACH resource with an RSRP greater than the rsrp-ThresholdBFR to perform random access during beam failure recovery.

An embodiment of the present disclosure provides an apparatus for determining an RSRP threshold, which is applied to a UE and includes: a second processing module 72 configured to determine an RSRP threshold corresponding to the UE based on configuration information and an antenna structure of the UE.

An embodiment of the present disclosure provides an apparatus for determining an RSRP threshold, which is applied to a UE and includes: a second processing module 72 configured to determine an offset threshold increased for the UE based on configuration information and an antenna structure of the UE.

An embodiment of the present disclosure provides an apparatus for determining an RSRP threshold, which is applied to a UE and includes: a second processing module 72 configured to, in response to an antenna structure of at least 2 receiving antennas supported by the UE under a first FR, determine that an RSRR threshold corresponding to the UE is a first RSRP threshold based on configuration information.

An embodiment of the present disclosure provides an apparatus for determining an RSRP threshold, which is applied to a UE and includes: a second processing module 72 configured to, in response to an antenna structure of 1 receiving antenna supported by the UE under a first FR, determine that an RSRR threshold corresponding to the UE is a second RSRP threshold based on configuration information; where the first RSRP threshold is greater than the second threshold.

An embodiment of the present disclosure provides an apparatus for determining an RSRP threshold, which is applied to a UE and includes: a second processing module 72 configured to, in response to an antenna structure of a first predetermined number of antenna elements for each receiving antenna of the UE under a second FR, determine that an RSRP threshold corresponding to the UE is a third RSRP threshold based on configuration information.

An embodiment of the present disclosure provides an apparatus for determining an RSRP threshold, which is applied to a UE and includes: a second processing module 72 configured to, in response to an antenna structure of a second predetermined number of antenna elements for each receiving antenna of the UE under a second FR, determine that an RSRP threshold corresponding to the UE is a fourth RSRP threshold based on configuration information; where the first predetermined number is greater than the second predetermined number; the third RSRP threshold is greater than the fourth RSRP threshold.

An embodiment of the present disclosure provides an apparatus for determining an RSRP threshold, which is applied to a UE and includes: a second processing module 72 configured to determine that an offset threshold increased for the UE is a first offset threshold in response to an antenna structure of 1 receiving antenna supported by the UE under a first FR.

An embodiment of the present disclosure provides an apparatus for determining an RSRP threshold, which is applied to a UE and includes: a second processing module 72 configured to determine that an offset threshold of the UE is a second offset threshold in response to an antenna structure of a second predetermined number of antenna elements for each receiving antenna of the UE under a second FR.

In some embodiments, the configuration information is configured to indicate one or more RSRP threshold-related parameters corresponding to UE with a predetermined power level; where the one or more RSRP threshold-related parameters corresponding to the UE with the predetermined power level include a fourth RSRP threshold and/or a second offset threshold.

An embodiment of the present disclosure provides an apparatus for determining an RSRP threshold, which is applied to a UE and includes:

a second processing module 72 is configured to determine that the UE is at a predetermined power level in response to an antenna structure of a second predetermined number of antenna elements for each receiving antenna of the UE under a second FR.

The second processing module 72 is further configured to, based on the predetermined power level and the configuration information, determine that the RSRP threshold corresponding to the UE is the fourth RSRP threshold and/or an offset threshold increased for the UE is the second offset threshold.

An embodiment of the present disclosure provides an apparatus for determining an RSRP threshold, which is applied to a UE and includes: a second processing module 72 configured to determine that an RSRP threshold corresponding to the UE is a fourth RSRP threshold and/or an offset threshold increased for the UE is a second offset threshold in response to a current power level of the UE being a predetermined power level.

In some embodiments, the first FR includes FR1; and/or, the second FR includes FR2.

It should be noted that those skilled in the art can understand that the apparatuses provided in the embodiments of the present disclosure can be executed separately or together with some apparatuses in the embodiments of the present disclosure or related technologies.

Regarding the apparatuses in the above embodiments, the specific ways in which each module performs operations have been described in detail in the relevant embodiments of the method, and will not be elaborated here.

An embodiment of the present disclosure provides a communication device, including:

one or more processors; and
a memory configured to store instructions executable by the one or more processors;
where the one or more processors are configured to implement the method according to any one of the embodiments of the present disclosure when executing the instructions.

In an embodiment, the communication device may include, but is not limited to, at least one of a core network device, an access network device, or a UE.

The processors may include various types of storage media, which are non- temporary computer storage media that can continue to remember information stored on the user equipment after power failure.

The processors can be connected to the memory through a bus or other means for reading executable programs stored on the memory, for example, at least one of the methods shown in FIGs. 2 to 7.

An embodiment of the present disclosure also provides a computer storage medium, which stores a computer executable program. When the executable program is executed by a processor, the method according to any one of the embodiments of the present disclosure is implemented, for example, at least one of the methods shown in FIGs. 2 to 7.

Regarding the apparatuses or storage medium in the above embodiments, the specific ways in which each module performs operations have been described in detail in the relevant embodiments of the method, and will not be elaborated here.

As shown in FIG. 11, this embodiment provides a UE 800. The UE 800 can specifically be a mobile phone, a computer, a digital broadcasting terminal, a messaging device, a game console, a tablet device, a medical device, a fitness device, a personal digital assistant, and the like.

Referring to FIG. 11, the UE 800 can include one or more of the following components: a processing component 802, a memory 804, a power supply component 806, a multimedia component 808, an audio component 810, an input/output (I/O) interface 812, a sensor component 814 and a communication component 816.

The processing component 802 generally controls overall operations of the UE 800, such as operations associated with display, phone calls, data communication, camera operations, and recording operations. The processing component 802 can include one or more processors 820 to execute instructions to complete all or part of the steps of the above methods. In addition, the processing component 802 can include one or more modules which facilitate the interaction between the processing component 802 and other components. For example, the processing component 802 can include a multimedia module to facilitate the interaction between the multimedia component 808 and the processing component 802.

The memory 804 is configured to store various types of data to support the operation of the UE 800. Examples of such data include instructions for any application or method operated on the UE 800, contact data, phonebook data, messages, pictures, videos, and so on. The memory 804 can be implemented by any type of volatile or non-volatile storage devices or a combination thereof, such as a Static Random Access Memory (SRAM), an Electrically Erasable Programmable Read Only Memory (EEPROM), an Erasable Programmable Read Only Memory (EPROM), a Programmable Read Only memory (PROM), a Read Only Memory (ROM), a magnetic memory, a flash memory, a magnetic or an optical disk.

The power supply component 806 provides power to various components of the UE 800. The power supply component 806 can include a power management system, one or more power supplies, and other components associated with generating, managing, and distributing power for the UE 800.

The multimedia component 808 includes a screen providing an output interface between the UE 800 and a user. In some examples, the screen may include a liquid crystal display (LCD) and a touch panel (TP). If the screen includes the TP, the screen can be implemented as a touch screen to receive input signals from the user. The TP includes one or more touch sensors to sense touches, swipes, and gestures on the TP. The touch sensor can not only sense a boundary of a touch or swipe, but also sense a lasting time and a pressure associated with the touch or swipe. In some embodiments, the multimedia component 808 can include a front camera and/or a rear camera. The front camera and/or rear camera can receive external multimedia data when the UE 800 is in an operating mode, such as a photographing mode or a video mode. Each of the front camera and the rear camera can be a fixed optical lens system or have focal length and optical zooming capability.

The audio component 810 is configured to output and/or input an audio signal. For example, the audio component 810 includes a microphone (MIC). When the UE 800 is in an operating mode, such as a call mode, a recording mode, and a voice recognition mode, the MIC is configured to receive an external audio signal. The received audio signal may be further stored in the memory 804 or transmitted via the communication component 816. In some embodiments, the audio component 810 further includes a speaker to output an audio signal.

The I/O interface 812 can provide an interface between the processing component 802 and peripheral interface modules. The above peripheral interface modules can include a keyboard, a click wheel, buttons and so on. These buttons can include, but are not limited to, a home button, a volume button, a starting button and a locking button.

The sensor component 814 includes one or more sensors to provide status assessments of various aspects for the UE 800. For example, the sensor component 814 can detect the on/off status of the UE 800, and relative positioning of a component, for example, the component is a display and a keypad of the UE 800. The sensor component 814 may also detect a change in position of the UE 800 or a component of the UE 800, a presence or absence of the contact between a user and the UE 800, an orientation or an acceleration/deceleration of the UE 800, and a change in temperature of the UE 800. The sensor component 814 can include a proximity sensor configured to detect the presence of a nearby object without any physical contact. The sensor component 814 can further include an optical sensor, such as a Complementary Metal Oxide Semiconductor (CMOS) or Charge-coupled Device (CCD) image sensor which is used in imaging applications. In some embodiments, the sensor component 814 can further include an acceleration sensor, a gyroscope sensor, a magnetic sensor, a pressure sensor, or a temperature sensor.

The communication component 816 is configured to facilitate wired or wireless communication between the UE 800 and other devices. The UE 800 can access a wireless network that is based on communication standards, such as Wi-Fi, 4G, 5G, or a combination thereof. In an exemplary embodiment, the communication component 816 receives a broadcast signal or broadcast-associated information from an external broadcast management system via a broadcast channel. In an exemplary embodiment, the communication component 816 further includes a Near Field Communication (NFC) module to facilitate short-range paging. For example, the NFC module can be implemented based on a Radio Frequency Identification (RFID) technology, an Infrared Data Association (IrDA) technology, an Ultra-Wide Band (UWB) technology, a Blue Tooth (BT) technology and other technologies.

In an exemplary embodiment, the UE 800 can be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components for performing the above methods.

In an exemplary embodiment, there is also provided a non-transitory machine readable storage medium including instructions, such as the memory 804 including instructions. The instructions may be executed by the processor 820 of the UE 800 to perform the above methods. For example, the non-transitory machine readable storage medium can be a ROM, a Random Access Memory (RAM), a CD-ROM, a magnetic tape, a floppy disk, an optical data storage device, and the like.

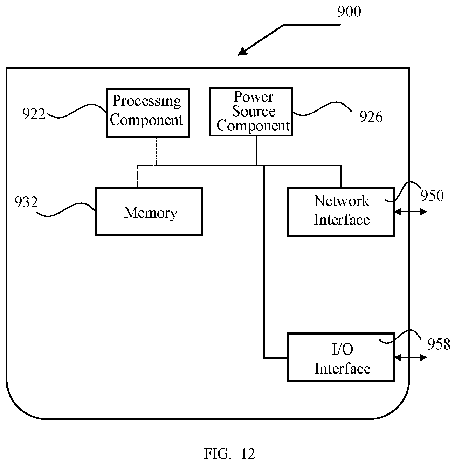

As shown in FIG. 12, an embodiment of the present disclosure illustrates the structure of a base station. For example, the base station 900 can be provided as a network side device. Referring to FIG. 12, the base station 900 includes a processing component 922 which further includes one or more processors, and a memory resource represented by a memory 932, configured to store instructions such as application programs executable by the processing component 922. The application programs stored in the memory 932 can include one or more than one modules, each of which corresponds to a set of instructions. In addition, the processing component 922 is configured to execute the instructions to perform any of the above methods applied to the base station, for example, any one of the methods as shown in FIGs. 4 to 10.

The base station 900 can further include a power source component 926 configured to execute power management of the base station 900, a wired or wireless network interface 950 configured to connect the base station 900 to a network, and an I/O interface 958. The base station 900 can be operated on the basis of an operating system stored in the memory 932, such as Windows Server TM, Mac OS XTM, UnixTM, LinuxTM or FreeBSDTM.

Those skilled in the art will readily recognize other embodiments of the present disclosure upon consideration of the specification and practice of the present disclosure disclosed herein. The present disclosure is intended to cover any variations, uses, or adaptations of the present disclosure, which follow general principles of the embodiments of the present disclosure and include common knowledge or customary means in the art that are not disclosed in the present disclosure. The specification and embodiments are exemplary only, with the true scope and spirit of the present disclosure being indicated by the following claims.

It should be understood that the present disclosure is not limited to the precise structure that has been described above and shown in the drawings, and various modifications and changes may be made without departing from the scope thereof. The scope of the present disclosure is limited only by the appended claims.

## Claims

1. A method for determining a reference signal received power (RSRP) threshold, performed by a network device, the method comprising:
   sending configuration information, wherein the configuration information is configured to indicate one or more RSRP threshold-related parameters corresponding to user equipment (UE) of at least one antenna structure; wherein RSRP thresholds corresponding to UEs of different antenna structures in a same frequency range (FR) are different.

2. The method according to claim 1, wherein the configuration information is configured to indicate the one or more parameters RSRP threshold-related parameters corresponding to the UE of the at least one antenna structure in at least one FR.

3. The method according to claim 1, wherein the one or more RSRP threshold-related parameters comprise at least one of:

   an RSRP threshold; or
   an offset threshold.

4. The method according to claim 2 or 3, wherein the configuration information is configured to indicate at least one of:

an RSRP threshold corresponding to the UE with at least two receiving antennas in a first FR is a first RSRP threshold;

an RSRP threshold corresponding to the UE with one receiving antenna in the first FR is a second RSRP threshold and/or an offset threshold corresponding to the UE with one receiving antenna in the first FR is a first offset threshold; wherein the second RSRP threshold is smaller than the first RSRP threshold;

an RSRP threshold corresponding to the UE with an antenna structure of a first predetermined number of antenna elements for each receiving antenna in a second FR is a third RSRP threshold; or

an RSRP threshold corresponding to the UE with an antenna structure of a second predetermined number of antenna elements for each receiving antenna in the second FR is a fourth RSRP threshold and/or an offset threshold corresponding to the UE with the antenna structure of the second predetermined number of antenna elements for each receiving antenna in the second FR is a second offset threshold;

wherein the first predetermined number is greater than the second predetermined number, and the third RSRP threshold is greater than the fourth RSRP threshold.

5. The method according to claim 1 or 2, further comprising:
determining the one or more RSRP threshold-related parameters of the UE based on the antenna structure of the UE.

6. The method according to claim 5, wherein determining the one or more RSRP threshold-related parameters of the UE based on the antenna structure of the UE comprises:

determining an RSRP threshold of the UE based on the antenna structure of a number of receiving antennas supported by the UE; and/or
determining an RSRP threshold of the UE based on the antenna structure of a number of antenna elements for each receiving antenna of the UE.

7. The method according to claim 6, wherein determining the RSRP threshold of the UE based on the antenna structure of the number of the receiving antennas supported by the UE comprises:

in response to an antenna structure of at least two receiving antennas supported by the UE in a first FR, determining the RSRP threshold of the UE as a first RSRP threshold; or
in response to an antenna structure of one receiving antenna supported by the UE in the first FR, determining the RSRP threshold of the UE as a second RSRP threshold;
wherein the first RSRP threshold is greater than the second RSRP threshold.

8. The method according to claim 6, wherein determining the RSRP threshold of the UE based on the antenna structure of the number of the antenna elements for each receiving antenna of the UE comprises:

in response to an antenna structure of a first predetermined number of antenna elements for each receiving antenna of the UE in a second FR, determining the RSRP threshold of the UE as a third RSRP threshold; or
in response to an antenna structure of a second predetermined number of antenna elements for each receiving antenna of the UE in the second FR, determining the RSRP threshold of the UE as a fourth RSRP threshold;
wherein the first predetermined number is greater than the second predetermined number, and the third RSRP threshold is greater than the fourth RSRP threshold.

9. The method according to claim 5, wherein determining the one or more RSRP threshold-related parameters of the UE based on the antenna structure of the UE comprises:

determining an offset threshold of the UE based on the antenna structure of a number of receiving antennas supported by the UE; and/or
determining an offset threshold of the UE based on the antenna structure of a number of antenna elements for each receiving antenna of the UE.

10. The method according to claim 9, wherein determining the offset threshold of the UE based on the antenna structure of the number of the receiving antennas supported by the UE comprises:
in response to an antenna structure of one receiving antenna supported by the UE in a first FR, determining the offset threshold of the UE as a first offset threshold.

11. The method according to claim 9, wherein determining the offset threshold of the UE based on the antenna structure of the number of the antenna elements for each receiving antenna of the UE comprises:
in response to an antenna structure of a second predetermined number of antenna elements for each receiving antenna of the UE in a second FR, determining the offset threshold of the UE as a second offset threshold.

**12.** The method according to claim 4, wherein,

the first FR comprises FR1; and/or
the second FR comprises FR2.

**13.** The method according to claim 3, wherein the RSRP threshold comprises at least one of:

an RSRP threshold of a synchronization signal block (SSB) rsrp-ThresholdSSB, configured for a UE to determine whether to allow to select a physical random access channel (PRACH) resource corresponding to a SSB with an RSRP greater than the rsrp-ThresholdSSB to perform operations;
an RSRP threshold of a channel state information-reference signal (CSI-RS) rsrp-Threshold-CSI-RS, configured for the UE to determine whether to allow to select a CSI-RS with an RSRP greater than the rsrp-ThresholdCSI-RS to perform operations;
an RSRP threshold of a SSB during random access msgA-RSRP-ThresholdSSB, configured for the UE to determine whether to allow to select a PRACH resource of MsgA corresponding to a SSB with an RSRP greater than the msgA-RSRP-ThresholdSSB to perform operations;
a random access RSRP threshold msgA-RSRP-Threshold, configured for the UE to determine whether to select a 2-step random access type to perform random access and/or whether to allow to select a random access channel (RACH) resource with an RSRP greater than the msgA-RSRP-Threshold to perform random access; or
an RSRP threshold for beam failure recovery rsrp-ThresholdBFR, configured for the UE to determine whether to allow to select a RACH resource with an RSRP greater than the rsrp-ThresholdBFR to perform random access during beam failure recovery.

**14.** The method according to claim 3, further comprising:

obtaining the offset threshold based on a wireless communication protocol; or
presetting the offset threshold.

**15.** The method according to claim 1 or 2, wherein the configuration information is further configured to indicate one or more RSRP threshold-related parameters corresponding to UE with a predetermined power level; wherein the one or more RSRP threshold-related parameters corresponding to the UE with the predetermined power level comprise a fourth RSRP threshold and/or a second offset threshold.

**16.** A method for determining a reference signal received power (RSRP) threshold, performed by a user equipment (UE), comprising:

receiving configuration information, wherein the configuration information is configured to indicate one or more RSRP threshold-related parameters corresponding to UE of at least one antenna structure; wherein RSRP thresholds corresponding to UEs of different antenna structures in a same frequency range (FR) are different; and
determining the one or more RSRP threshold-related parameters of the UE based on the configuration information and an antenna structure of the UE.

**17.** The method according to claim 16, further comprising:
determining whether the UE is allowed to access a cell and/or performs beam recovery-related operations based on the one or more RSRP threshold-related parameters of the UE.

**18.** The method according to claim 16, wherein the configuration information is configured to indicate the one or more RSRP threshold-related parameters corresponding to the UE of the at least one antenna structure in at least one FR.

**19.** The method according to claim 16, wherein the one or more RSRP threshold-related parameters comprise at least one of:

an RSRP threshold; or
an offset threshold.

**20.** The method according to claim 18 or 19, wherein the configuration information is configured to indicate at least one of:

an RSRP threshold corresponding to the UE with at least two receiving antennas in a first FR is a first RSRP threshold;
an RSRP threshold corresponding to the UE with one receiving antenna in the first FR is a second RSRP threshold and/or an offset threshold corresponding to the UE with one receiving antenna in the first FR is a first offset threshold; wherein the second RSRP threshold is smaller than the first RSRP threshold;
an RSRP threshold corresponding to the UE with an antenna structure of a first predetermined number of antenna elements for each receiving antenna in a second FR is a third RSRP threshold; or
an RSRP threshold corresponding to the UE with an antenna structure of a second predetermined number of antenna elements for each receiving antenna in the second FR is a fourth RSRP threshold and/or an offset threshold corresponding to the UE with the antenna structure of the second predetermined number of antenna elements for each receiving antenna in the second FR is a second offset threshold; wherein the first predetermined number is greater than the second predetermined number, and the third RSRP threshold is greater than the fourth RSRP threshold.

21. The method according to any one of claims 16 to 19, wherein determining the one or more RSRP threshold-related parameters of the UE based on the configuration information and the antenna structure of the UE comprises:

    determining an RSRP threshold corresponding to the UE based on the configuration information and the antenna structure of the UE; or determining an offset threshold increased for the UE based on the configuration information and the antenna structure of the UE.

22. The method according to claim 21, wherein determining the RSRP threshold corresponding to the UE based on the configuration information and the antenna structure of the UE comprises:

    in response to an antenna structure of at least two receiving antennas supported by the UE in a first FR, determining that the RSRP threshold corresponding to the UE is a first RSRP threshold based on the configuration information; or in response to an antenna structure of one receiving antenna supported by the UE in the first FR, determining that the RSRP threshold corresponding to the UE is a second RSRP threshold based on the configuration information; wherein the first RSRP threshold is greater than the second RSRP threshold.

23. The method according to claim 21, wherein determining the RSRP threshold corresponding to the UE based on the configuration information and the antenna structure of the UE comprises:

    in response to an antenna structure of a first predetermined number of antenna elements for each receiving antenna of the UE in a second FR, determining that the RSRP threshold corresponding to the UE is a third RSRP threshold based on the configuration information; or in response to an antenna structure of a second predetermined number of antenna elements for each receiving antenna of the UE in the second FR, determining that the RSRP threshold corresponding to the UE is a fourth RSRP threshold based on the configuration information; wherein the first predetermined number is greater than the second predetermined number, and the third RSRP threshold is greater than the fourth RSRP threshold.

24. The method according to claim 21, wherein determining the offset threshold increased for the UE based on the configuration information and the antenna structure of the UE comprises: in response to an antenna structure of one receiving antenna supported by the UE in a first FR, determining that the offset threshold increased for the UE is a first offset threshold.

25. The method according to claim 21, wherein determining the offset threshold increased for the UE based on the configuration information and the antenna structure of the UE comprises: in response to an antenna structure of a second predetermined number of antenna elements for each receiving antenna of the UE in a second FR, determining that the offset threshold increased for the UE is a second offset threshold.

26. The method according to any one of claims 16 to 19, wherein the configuration information is at least configured to indicate one or more RSRP threshold-related parameters corresponding to UE with a predetermined power level; wherein the one or more RSRP threshold-related parameters corresponding to the UE with the predetermined power level comprise a fourth RSRP threshold and/or a second offset threshold.

27. The method according to claim 26, wherein determining the one or more RSRP threshold-related parameters of the UE based on the configuration information and the antenna structure of the UE comprises:

    in response to an antenna structure of a second predetermined number of antenna elements for each receiving antenna of the UE in a second FR, determining that the UE is at the predetermined power level; and based on the predetermined power level and the configuration information, determining that an RSRP threshold corresponding to the UE is the fourth RSRP threshold and/or an offset threshold increased for the UE is the second offset threshold.

28. The method according to claim 26, further comprising: in response to a current power level of the UE being the predetermined power level, determining that an RSRP threshold corresponding to the UE is the fourth RSRP threshold or an offset threshold increased for the UE is the second offset threshold.

29. The method according to any one of claims 18, or 22 to 25, wherein,

the first FR comprises FR1; and/or
the second FR comprises FR2.

30. The method according to claim 19, wherein the RSRP threshold comprises at least one of:

an RSRP threshold of a synchronization signal block (SSB) rsrp-ThresholdSSB, configured for a UE to determine whether to allow to select a physical random access channel (PRACH) resource corresponding to a SSB with an RSRP greater than the rsrp-ThresholdSSB to perform operations;
an RSRP threshold of a channel state information-reference signal (CSI-RS) rsrp-ThresholdCSI-RS, configured for the UE to determine whether to allow to select a CSI-RS with an RSRP greater than the rsrp-ThresholdCSI-RS to perform operations;
an RSRP threshold of a SSB during random access msgA-RSRP-ThresholdSSB, configured for the UE to determine whether to allow to select a PRACH resource of MsgA corresponding to a SSB with an RSRP greater than the msgA-RSRP-ThresholdSSB to perform operations;
a random access RSRP threshold msgA-RSRP-Threshold, configured for the UE to determine whether to select a 2-step random access type to perform random access and/or whether to allow to select a random access channel (RACH) resource with an RSRP greater than the msgA-RSRP-Threshold to perform random access; or
an RSRP threshold for beam failure recovery rsrp-ThresholdBFR, configured for the UE to determine whether to allow to select a RACH resource with an RSRP greater than the rsrp-ThresholdBFR to perform random access during beam failure recovery.

31. An apparatus for determining a reference signal received power (RSRP) threshold, comprising:
a sending module, configured to send configuration information, wherein the configuration information is configured to indicate one or more RSRP threshold-related parameters corresponding to user equipment (UE) of at least one antenna structure; wherein RSRP thresholds corresponding to UEs of different antenna structures in a same frequency range (FR) are different.

32. An apparatus for determining a reference signal received power (RSRP) threshold, comprising:

a receiving module, configured to receive configuration information, wherein the configuration information is configured to indicate one or more RSRP threshold-related parameters corresponding to user equipment (UE) of at least one antenna structure; wherein RSRP thresholds corresponding to UEs of different antenna structures in a same frequency range (FR) are different; and
a processing module, configured to determine the one or more RSRP threshold-related parameters of the UE based on the configuration information and an antenna structure of the UE.

33. A communication device, comprising:

one or more processors; and
a memory configured to store instructions executable by the one or more processors;
wherein the one or more processors are configured to implement the method according to any one of claims 1 to 15 or claims 16 to 30 when executing the instructions.

34. A computer storage medium storing computer executable instructions that, when executed by a processor, implement the method according to any one of claims 1 to 15 or claims 16 to 30.

FIG. 1

S21: send configuration information, where the configuration information is configured to indicate one or more RSRP threshold-related parameters corresponding to UE of at least one antenna structure; where RSRP thresholds corresponding to UEs of different antenna structures in a same FR are different

FIG. 2

Network
Device

UE

wireless communication

S31: determine one or more RSRP
threshold-related parameters of a UE
based on an antenna structure of the UE

FIG. 3

Network
Device

UE

wireless communication

S41: determine an RSRP threshold of the UE
based on an antenna structure of the number of
receiving antennas supported by the UE; and/or,
determine the RSRP threshold of the UE based
on an antenna structure of the number of antenna
elements for each receiving antenna of the UE

FIG. 4

Network
Device

UE

wireless communication

S51: determine an offset threshold of the UE
based on an antenna structure of the number of
receiving antennas supported by the UE; and/or,
determine the offset threshold of the UE based on
an antenna structure of the number of antenna
elements for each receiving antenna of the UE

FIG. 5

Network
Device

UE

S61: receive configuration
information, where the
configuration information is
configured to indicate one or
more RSRP threshold-related
parameters corresponding to UE
of at least one antenna structure

S62: determine one or more RSRP
threshold-related parameters of the UE
based on the configuration information and
an antenna structure of the UE

FIG. 6

Network
Device

UE

wireless communication

S71: in response to an antenna structure of a
second predetermined number of antenna
elements for each receiving antenna of the UE
under a second FR, determine that the UE is at
a predetermined power level

S72: based on the predetermined power level
and the configuration information, determine
that an RSRP threshold corresponding to the
UE is a fourth RSRP threshold and/or an offset
threshold increased for the UE is a second
offset threshold

FIG. 7

Sending Module 61

Network Device

FIG. 8

First Processing Module 62

Network Device

FIG. 9

Receiving Module 71

Second Processing Module 72

UE

FIG. 10

804       802    800

Memory

Processing
Component

Communication
Component

816

806

Power Supply
Component

Processor

820

808

Multimedia
Component

Sensor
Component

814

810

Audio
Component

I/O Interface

812

FIG. 11

900

Processing Component

922

Power Source Component

926

932

Memory

Network Interface

950

I/O Interface

958

FIG. 12

**INTERNATIONAL SEARCH REPORT**

International application No.

**PCT/CN2022/085667**

| A. | CLASSIFICATION OF SUBJECT MATTER |
|---|---|

H04W 72/08(2009.01)i

According to International Patent Classification (IPC) or to both national classification and IPC

| B. | FIELDS SEARCHED |
|---|---|

Minimum documentation searched (classification system followed by classification symbols)

H04W; H04B

Documentation searched other than minimum documentation to the extent that such documents are included in the fields searched

Electronic data base consulted during the international search (name of data base and, where practicable, search terms used)

CNTXT, CNABS, ENTXT, VEN, 3GPP, CNKI, IEEE: 参考信号接收功率, 门限, 阈值, 配置, 指示, 天线, 数量, 功率缩减, 频率, RSRP, threshold, configure, collocate, indicate, antenna, number, quantity, RedCap, frequency

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | OPPO. "Mechanism in higherPHY layer for Reduced Capability NR Devices" *3GPP TSG RAN WG1 #106bis-e R1-2109084,* 02 October 2021 (2021-10-02), section 2 | 1-34 |
| X | OPPO. "Mechanism in higherPHY layer for Reduced Capability NR Devices" *3GPP TSG RAN WG1 #107-e R1-2111324,* 05 November 2021 (2021-11-05), section 2 | 1-34 |
| X | OPPO. "Mechanism in higherPHY layer for Reduced Capability NR Devices" *3GPP TSG RAN WG1 #106-e R1-2107252,* 07 August 2021 (2021-08-07), section 2 | 1-34 |
| X | OPPO. "Discussion on reduced number of UE Rx branches" *3GPP TSG RAN WG1 #106-e R1-2107250,* 07 August 2021 (2021-08-07), section 2 | 1-34 |
| X | OPPO. "Other considerations for reduced UE capability" *3GPP TSG RAN WG1 #105-e R1-2104786,* 12 May 2021 (2021-05-12), section 2 | 1-34 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **04 November 2022** | **03 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/085667**

### C. DOCUMENTS CONSIDERED TO BE RELEVANT

| Category* | Citation of document, with indication, where appropriate, of the relevant passages | Relevant to claim No. |
|---|---|---|
| A | CN 113056926 A (BEIJING XIAOMI MOBILE SOFTWARE CO., LTD.) 29 June 2021 (2021-06-29)<br>entire document | 1-34 |
| A | CN 113170344 A (BEIJING XIAOMI MOBILE SOFTWARE CO., LTD.) 23 July 2021 (2021-07-23)<br>entire document | 1-34 |
| A | CN 113455076 A (BEIJING XIAOMI MOBILE SOFTWARE CO., LTD.) 28 September 2021 (2021-09-28)<br>entire document | 1-34 |
| A | US 2021195654 A1 (QUALCOMM INC.) 24 June 2021 (2021-06-24)<br>entire document | 1-34 |
| A | WO 2022019817 A1 (TELEFONAKTIEBOLAGET LM ERICSSON (PUBL)) 27 January 2022 (2022-01-27)<br>entire document | 1-34 |

**INTERNATIONAL SEARCH REPORT**
Information on patent family members

International application No.

**PCT/CN2022/085667**

| Patent document cited in search report | | | Publication date (day/month/year) | Patent family member(s) | | | Publication date (day/month/year) |
|---|---|---|---|---|---|---|---|
| CN | 113056926 | A | 29 June 2021 | None | | | |
| CN | 113170344 | A | 23 July 2021 | None | | | |
| CN | 113455076 | A | 28 September 2021 | None | | | |
| US | 2021195654 | A1 | 24 June 2021 | TW | 202127945 | A | 16 July 2021 |
| | | | | WO | 2021127563 | A1 | 24 June 2021 |
| | | | | IN | 202247030246 | A | 24 June 2022 |
| WO | 2022019817 | A1 | 27 January 2022 | None | | | |

Form PCT/ISA/210 (patent family annex) (January 2015)